# EUROPEAN PATENT SPECIFICATION

(11) **EP 4 192 924 B1**
(45) Date of publication and mention of the grant of the patent: **10.07.2024**
(21) Application number: 21755932.7
(22) Date of filing: 04.08.2021
(51) Int. Cl.: C10G 1/10, C10B 53/07, B01J 19/00, C10B 57/02

(54) **PROCESS FOR CRACKING A POLYOLEFIN CONTAINING MATERIAL**
VERFAHREN ZUM CRACKEN EINES POLYOLEFINHALTIGEN MATERIALS
PROCÉDÉ DE CRAQUAGE D'UN MATÉRIAU CONTENANT DES POLYOLÉFINES

(30) Priority: 06.08.2020 EP 20189750
(43) Date of publication of application: 14.06.2023
(73) Proprietor: Indaver Plastics2chemicals, 2030 Antwerpen (BE)
(72) Inventor: ALDERWEIRELDT, Nick, 2970 Zoersel (BE); KRESOVIC, Uros, 3111 Wezemaal (BE)
(74) Representative: Gevers Patents
(86) International application number: PCT/EP2021/071786
(87) International publication number: WO 2022/029185

(56) References cited:
- US-A1- 2013 245 345
- US-A1- 2016 040 074

## Description

The present invention relates to a process for cracking a polyolefin containing material wherein the material is thermally cracked to be converted into one or more gaseous cracking products thereby leaving only a solid residue. The solid residue comprises carbon, i.e char, and uncrackable materials such as inorganic materials. The solid residue is preferably completely cracked so that it is free of hydrocarbons. The polyolefin containing starting material contains at least 60 %, preferably at least 70% by dry weight of one or more polyolefins and optionally at least one thermally more stable polymer. The plastic material is in particular a waste material, more in particular a post-consumer waste material from curb-stone collection.

Waste materials, such as municipal solid waste, contain a relatively large fraction of polymeric materials, including polyolefins. These polyolefins are often landfilled or incinerated for energy recovery. Recycling of materials become however more and more important. The recovery of secondary materials is to be preferred over incineration or landfilling. A problem with recycling polyolefins is that the recycling process should be made more cost effective so that it becomes an interesting alternative to the use of the plastic waste material as energy source.

Polyolefin waste can be cracked to produce hydrocarbons having molecular weights within different ranges. Such cracking process produces gaseous or in other words non-condensable hydrocarbons, in particular C₁ to C₅ hydrocarbons, and liquid mixtures of hydrocarbons having boiling points higher than about 40°C. Moreover, a solid residue is produced when the material is cracked until a bone dry composition is obtained. This solid residue comprises char and also inorganic compounds, which are mainly mineral fillers, inorganic pigments and impurities, such as sand and salts, which cannot be cracked. The solid residue may also comprise a lot of aluminium in case the plastic material comprises polyal, i.e. a complex material containing a combination of aluminium and polymeric layers.

The production of gaseous hydrocarbons and of char is to be kept to a minimum as they are mainly only useful as fuel. The liquid hydrocarbons comprise a lower boiling naphtha fraction and a higher boiling wax fraction. Paraffin wax is the most valuable cracking product of polyolefins, at least if it consists mainly of straight paraffinic hydrocarbons. Paraffin wax may consist for example of a mixture of hydrocarbons having boiling points comprised between 425°C and 525°C, i.e. a mixture of C₂₈ to C₄₀ hydrocarbons.

In his article "Continuous flow cracking of waste plastics", in Fuel Processing Technology, August 2005, J. Walendziewski describes an extruder for melting waste plastics followed by a tube reactor for thermally cracking the molten material leaving the extruder. The waste plastics comprise polypropylene, polyethylene and/or polystyrene. In the extruder the waste plastics are heated to a temperature of 250°C. The molten plastic material is then cracked in the tube reactor at a temperature of between 420 and 500°C. The material is cracked so as to be converted in a gaseous cracking product and immediately also into a solid residue which mainly comprises char. The tube reactor comprises a screw mixer to mix and distribute the fluid over the internal surface reactor wall and to remove the solid carbon residue from the reactor wall and transport it out of the reactor. The reactor is upwardly inclined so that not only the solid carbon residue is removed from the outlet of the tube reactor but also the other products which have been cracked to evaporation. For a mixture of 90% PE and 10% PS, cracked under atmospheric pressure and at a reactor wall temperature of between 420°C and 480-500°C, the cracking products comprised 85.3 wt.% of liquid product, 9.93 wt.% gaseous product and 4.17 wt.% solid carbon residue (char), the latter including only 0.68 wt.% of inorganic material contained in the plastic feed material and thus a substantial amount of char produced during the cracking process. The liquid product contained no, or nearly no wax compounds as 80% of distillate volume was obtained at a distillation temperature of 346°C (i.e. at the boiling point of a C₂₀ hydrocarbon).

A drawback of the process of Walendziewski is that the liquid product yield is only about 85% and that this liquid product only consists of fractions (gasoline and light gas oils) which comprise hydrocarbons having boiling points within the range of 35 to 360°C, i.e. C₅ to C₂₂ hydrocarbons. Such fuel fractions can only be used as fuel or as feed for a steam cracker to produce monomers, in particular ethylene, propylene and butylene.

A further drawback of the process of Walendziewski is that the plastic material is cracked at a relatively low temperature so that the plastic material may not contain polymers which are thermally more stable than the polyolefins contained in the plastic material, for example biopolymers or certain rubbers which are for example contained in high impact polystyrene (HIPS). Indeed, these thermally more stable polymers also need to be cracked to evaporation in order to obtain a bone dry residue, i.e. a solid residue which is not in the form of a tar and which can thus be removed easily from the reactor. A higher cracking temperature is thus required to crack also these thermally more stable polymers. Applying such a higher temperature in the tube reactor of Walendziewski would however further increase the yield of non-condensable gaseous product and of char and would thus further reduce the yield of the more valuable higher hydrocarbons. From an economic point of view, the process of Walendziewski is thus not suited for treating post-consumer materials, which comprise a mixture of different plastic materials, having different T₅₀ degradation temperatures, and/or which are polluted with organic waste/biopolymers.

WO 2013/119941 also discloses a tube reactor with an internal screw for cracking waste plastics. Cracking/pyrolysis is performed at a temperature of between 454 and 488°C. The tube reactor is an industrial reactor which comprises, downstream the pyrolysis zone, a devolatilisation zone wherein any remaining liquid material is further cracked, at a temperature of between 488 and 982°C, to produce a solid char product which is removed at the end of the tube reactor. At the transition between the pyrolysis zone and the devolatilisation zone a discharge port is provided for the evaporated cracking products. Just before the pyrolysis zone, a liquid paraffin or microcrystalline wax product, which comprises a mixture of C₃₀ to C₇₀ hydrocarbons, is tapped off from the liquid phase present in the reactor. In this known process, the non-condensable product and the lower boiling liquid product (naphtha product) are thus tapped off from the gaseous phase contained in the reactor whilst the higher boiling liquid product (wax product) is tapped off from the liquid phase contained in the reactor.

In the process disclosed in WO 2013/119941 the polyolefin containing material is not cracked to be converted in one or more gaseous cracking products leaving further only a solid non-crackable residue since a wax product is tapped off from the liquid phase contained in the reactor. Instead, the polyolefin containing material is cracked to be converted in the reactor in one or more gaseous cracking products, into a solid residue and into a liquid cracking product. A drawback of tapping off the wax product from the liquid phase is that it will also contain quite some impurities such as char and other inorganic impurities from the starting feedstock. Moreover, it will also contain molten hydrocarbon material with a boiling point which is still too high to be used as a wax. A wax, in particular a microcrystalline wax, comprises indeed only hydrocarbons having up to 40 carbon atoms, or even less, at most. In practice, the material tapped off from the liquid phase in the process of WO 2013/119941 is not used as a wax but is added, in a granular form, to a virgin thermoplastic material. In WO 2013/119941 the feed of the plastic material needs to be controlled accurately so that at the location of the wax take-off port the liquid material is sufficiently cracked whilst the level of the melt boundary is still sufficiently high at the location of the wax take-off port in order to be able to tap off the desired amount of wax product.

A further drawback of the tube reactor disclosed in WO 2013/119941 is that once evaporated the gaseous cracking products still have to travel over a considerable distance through the head space in the tube reactor before they are removed from the reactor. WO 2013/119941 proposes to introduce a purge gas, for example a portion of the non-condensable gaseous product, in the coldest portion of the pyrolysis zone to remove the evaporated cracking products more quickly from the reactor to avoid over-cracking thereof. However, such a purge gas causes an additional load for the separation apparatus used to separate the gaseous and the liquid products. The discharge port for discharging the vapours produced in the final zone, i.e. the higher temperature zone wherein the solid char product is produced, is moreover also situated at the transition between the pyrolysis zone and the devolatilisation zone. These hotter vapours are therefore transported towards the pyrolysis zone and can thus increase the temperature of the vapours leaving the pyrolysis zone and accelerate the further cracking thereof. It is to be expected that the material which is cracked to evaporation contains a considerable amount of gaseous product even when a purge gas is used.

US 2013/0245345 discloses to replace one pyrolysis reactor, operated at about 400°C, by a cascade of two or more tube reactors operated at lower, increasing temperatures. The first reactor is operated at a temperature at which lower boiling hydrocarbons are extracted from the reactor whilst the next reactor or reactors are operated at higher temperatures so that high boiling hydrocarbons are extracted from these reactors. In this way, it is no longer necessary to perform post-extraction re-processing of the extracted hydrocarbons to separate them into their respective fractions. These fractions include for example a gas fraction, comprising methane, ethane, butane and propane, a petroleum fraction and a diesel fraction. The first reaction is for example operated at around 150°C, which is the boiling point of a C₉ hydrocarbon, the second reactor at around 250°C, which is the boiling point of a C₁₄ hydrocarbon, and the third reactor at around 350°C, which is the boiling point of a C₂₁ hydrocarbon.

A drawback of this prior art method is that a catalyst has to be used in order to be able to crack the hydrocarbon-containing material at such low temperatures, i.e. at temperatures around the boiling points of the fuel fractions which are to be produced. This catalyst has to be separated from the solid residue and involves additional costs, especially since some of the catalyst will be lost or will need to be renewed. A further drawback of this prior art method is that different materials, in particular rubber and plastics, should not be processed simultaneously in the same reactor since the temperature at which certain organic compounds are evolved from different raw material sources may differ from source to source requiring conditions in a given reactor to be optimised for a given raw material type.

An object of the present invention is to provide a new process for cracking a polyolefin containing material wherein the material is cracked into one or more gaseous cracking products leaving further only a solid residue consisting of non-crackable materials, which process enables to achieve a higher yield of a wax fraction in the gaseous cracking product and to keep the yield of non-condensable gaseous product in the evaporated cracking product limited.

To this end, the process according to the invention is characterised in that the polyolefin containing material is cracked stepwise in a series of at least two successive cracking reactors which each contain a liquid phase and a gaseous phase, the liquid phase being cracked in each of the cracking reactors to produce a gaseous cracking product which is removed from the cracking reactor during the production thereof, said series of cracking reactors comprising a first cracking reactor and one or more further cracking reactors, including a final cracking reactor, the first cracking reactor being fed with said polyolefin containing material and said one or more further cracking reactors being each fed at least with part of the liquid phase contained in the previous cracking reactor of said series. In the process according to the invention the liquid phase contained in said first cracking reactor is kept at a first temperature of between 420°C and 525°C and is cracked in said first cracking reactor at said first temperature to produce a first gaseous cracking product; the first gaseous cracking product is removed from the first cracking reactor during the production thereof and is subsequently at least partially condensed; the liquid phase contained in said final cracking reactor is kept at a final temperature, which is at least 20°C higher than said first temperature, and is cracked in said final cracking reactor at said final temperature to produce a final gaseous cracking product; and the final gaseous cracking product is removed from the final cracking reactor during the production thereof and is subsequently at least partially condensed. Moreover, in the process according to the present invention, feeding of liquid phase from said previous cracking reactor into the final cracking reactor is interrupted at predetermined points in time while the liquid phase contained in said final cracking reactor is further cracked until the liquid phase contained in said final cracking reactor is converted into said solid residue; the solid residue is removed from the final cracking reactor; and after having removed the solid residue from the final cracking reactor, feeding of liquid phase from said previous cracking reactor into the final cracking reactor is resumed.

In the method according to the present invention, the polyolefin containing material is cracked to be converted into gaseous cracking products leaving a solid residue, i.e. a residue which is solid under the cracking conditions. The gaseous products are at least partially condensed to produce liquid hydrocarbons. The expression "at least partially" is used here since the gaseous products will normally contain non-condensable products, i.e. gases, which will not be condensed when condensing the gaseous products, in particular when the gaseous products are cooled down, at atmospheric pressure, to a temperature of about 40°C. An advantage of producing only gaseous cracking products is that they are immediately free of solid impurities, such as inorganic compounds which do not crack and which were already present in the feed material and carbon (char) particles produced during the cracking process. Moreover, the gaseous products are also free of plastic/polymeric material which has not yet been cracked sufficiently. It also enables the use of continuous stirred-tank reactors wherein plastic material is continuously fed and from which gaseous product is continuously removed to produce a wax product.

In the method according to the present invention, the polyolefin containing material is cracked stepwise in a series of successive cracking reactors. In the first cracking reactor the liquid phase is kept at a temperature which is lower than the temperature of the liquid phase in the final cracking reactor. The present inventors have found that a lower cracking temperature enables to reduce the production of non-condensable gases. The polyolefin containing material can thus be cracked under optimal temperature conditions in the first cracking reactor to maximize the yield of the condensable fraction of the gaseous cracking product. Moreover, since the first cracking reactor continuously contains liquid phase which can be cracked, i.e. since the material is not completely cracked in the first reactor, a higher yield of higher molecular weight hydrocarbons is obtained, in particular a higher yield of wax fraction.

An advantage of the process of the present invention is that the polyolefin or polyolefins contained in the polyolefin containing material do not need to be cracked completely in the first reactor so that the temperature in the first reactor may be lower than the temperature at which the polyolefin or polyolefins are completely cracked in a TGA analysis. The production of non-condensable gases can thus be reduced whilst the polyolefin itself will be completely cracked in the final cracking reactor, or in one of the further cracking reactors, which are operated at a higher temperature.

The problem of the possible presence of more thermally stable polymers in the polyolefin containing (waste) material, which do not crack or at a smaller rate than the polyolefins in the first reactor, is also solved in the process according to the invention by the fact that part of the liquid phase of the first cracking reactor is fed to the next cracking reactor (which is either the final cracking reactor or an intermediate reactor from which liquid phase is also fed to a next cracking reactor). The thermally more stable polymeric material, and also the part of the polyolefins which is not completely cracked, can thus only accumulate to a limited extent in the first reactor and may finally arrive in the final reactor wherein it will be cracked as a result of the higher temperature at which the liquid phase is kept in this final reactor.

In the method according to the present invention, the problem of the accumulation of char in the reactors, especially in the final reactor, is solved by interruption of the feeding of liquid phase in the final reactor at predetermined points in time while continuing the cracking of the liquid phase in the final reactor. Cracking of this liquid phase is more particularly continued until the liquid phase contained in the final cracking reactor has disappeared and has been converted completely into the final gaseous product leaving only the solid residue in the final cracking reactor.

The first temperature, i.e. the temperature in the first reaction, should be sufficiently high, namely within the range of 420 to 525°C, and the temperature in the final reactor should be at least 20°C higher. Keeping the liquid phase in the first reactor at such a relatively high temperature enables to produce a first gaseous product which contains a larger amount of higher molecular weight hydrocarbons. At such a high temperature, the polyolefins are cracked at a higher rate so that the residence time of the gaseous cracking product in the first reactor is shorter, especially since the first reactor continuously contains liquid phase which is continuously cracked. Undesired further cracking of the first gaseous product in the gaseous phase of the first cracking reactor to lighter fractions, and especially also to non-condensable gases, is thus reduced.

In an embodiment of the process according to the present invention the liquid phase contained in the final cracking reactor is further cracked therein, after having interrupted feeding of liquid phase in the final cracking reactor, at a temperature which is higher than 525°C, preferably higher than 535°C and more preferably higher than 545°C. Alternatively or additionally, the liquid phase contained in the final cracking reactor is further cracked therein, after having interrupted feeding of liquid phase in the final cracking reactor, at a temperature which is at least 30°C, preferably at least 40°C and more preferably at least 50°C higher than said first temperature.

It has been found that at such high temperatures a bone dry solid residue, which is no longer sticky and which can thus be removed easily from the final reactor, can be obtained even when the polyolefin containing material contains polymers which are more difficult to crack or when compounds which are more difficult to crack are formed in situ during the cracking process itself.

Preferably, the temperature at which the liquid phase contained in the final cracking reactor is further cracked after having interrupted feeding of liquid phase in the final cracking reactor is lower than 650°C and more preferably lower than 600°C.

In an embodiment of the process according to the present invention, or according to any one of the preceding embodiments, before having interrupted feeding of liquid phase in the final cracking reactor the liquid phase contained therein is kept at said final temperature which is at least 20°C higher than said first temperature.

The thermally more stable polymers which may be present in the plastic material have a higher T₅₀ degradation temperature than the polyolefins contained in the plastic material. The polyolefins, or one or more of the polyolefins, may also not crack completely at the first temperature in the first reactor. By the higher temperature in the final reactor the thermally more stable polymers, and also the portion of the polyolefins which are not completely cracked in the first reactor, can thus also be cracked to produce valuable products.

In an embodiment of the process according to the present invention, or according to any one of the preceding embodiments, before having interrupted feeding of liquid phase in the final cracking reactor the liquid phase contained therein is kept at said final temperature which is at most 50°C, preferably at most 40°C and more preferably at most 30°C higher than said first temperature.

The higher temperature enables to crack the polyolefins which have already been cracked partially more easily and/or more completely, and optionally also the thermally more stable polymers, whilst keeping however the production of non-condensable gases limited. Due to the higher temperature in the final reactor somewhat more non-condensable gases will be produced therein but the amount of liquid phase which is cracked in the final reactor is only a fraction of the amount of liquid phase cracked in the first reactor and the cracking temperature is preferably still limited to the maximum temperatures as defined in this preferred embodiment.

In an embodiment of the process according to the present invention, or according to any one of the preceding embodiments, said polyolefin containing material contains one or more biopolymers, in particular in an amount of at least 0.1 % by dry weight, and/or said polyolefin containing material is a post-consumer waste material, in particular waste material from curb-side collection.

The presence of biopolymers makes it more difficult to obtain a bone dry solid residue. Even when waste material from curb-side collection is washed, it will still be polluted to some extent and it will still contain for example paper in the form of labels which are adhered to the polymeric material.

In an embodiment of the process according to the present invention, or according to the preceding embodiment, the material is cracked in the final reactor in such a manner that the solid residue produced therein is substantially free of hydrocarbons.

In an embodiment of the process according to the present invention said first temperature is lower than or equal to 510°C and preferably lower than or equal to 500°C.

The present inventors have found that especially the temperature has an important effect on the production of non-condensable gases and that the maximum temperatures of this embodiment enable to minimize the production of gases. By increasing the pressure of the gaseous phase, a larger fraction of lighter hydrocarbons are produced but surprisingly, when the temperature is sufficiently low, not more non-condensable gases.

In an embodiment of the process according to the present invention, or according to any one of the preceding embodiments, said first temperature is higher than 430°C and preferably higher than 440°C. Alternatively, or additionally, said material has a T₅₀ degradation temperature at which a weight loss of 50% takes place in a thermogravimetric analysis, at a heating rate of 10°C per minute, said first temperature being at most 20°C and preferably at most 5°C lower than said T₅₀ degradation temperature and is more preferably at least 10°C, most preferably at least 20°C higher than said T₅₀ degradation temperature. In case one or more additives, such as catalysts or calcium oxide, are used in the first reactor which lower the T₅₀ degradation temperature of the plastic material, the T₅₀ degradation temperature has to be determined for the polyolefin containing material mixed with those one or more additives (in the same concentration as in the liquid phase contained in the first reactor).

Keeping the liquid phase in the first reactor at a temperature higher than these preferred minimum temperatures is advantageous in that a first gaseous product can be produced which contains a larger amount of higher molecular weight hydrocarbons.

In an embodiment of the process according to the present invention, or according to any one of the preceding embodiments, the gaseous phase is kept in said first cracking reactor at a first pressure which is lower than 7.0 bara, preferably lower than 5.0 bara and more preferably lower than 3.0 bara, said first pressure being preferably higher than 0.1 bara, more preferably higher than 0.3 bara and most preferably higher than 0.4 bara.

A pressure lower that these maximum pressures is preferred in the first cracking reactor since it has been found that a lower pressure increases the yield of waxes having a longer chain length, in particular a C₃₀ to C₄₀ chain length, and reduces at the same time the short chain fraction, in particular the fraction having a chain length of less than 15 carbon atoms. Especially when the temperature in the first reactor is relatively high, lower pressures were also found to reduce the formation of non-condensable gases. On the other hand, a pressure higher than the minimum pressures is preferred in order to avoid a too large fraction of hydrocarbons having a too high chain length, for example a chain length higher than C₄₀, which needs to be re-cracked and which thus has to be separated off from the valuable fraction.

In an embodiment of the process according to the present invention, or according to any one of the preceding embodiments, the gaseous phase is kept in said first cracking reactor at a first pressure, the first cracking reactor being operated at at least two different values of said first pressure, including in particular at least one lower value so that said first gaseous product has a first weight average carbon number and at least one higher value, which is higher than said lower value, so that said first gaseous product has a second weight average carbon number which is lower than said first weight average carbon number. Preferably, said higher value of said first pressure is larger than 1.0 bara, preferably larger than 1.2 bara and more preferably larger than 1.4 bara, and said lower value of said first pressure is smaller than 1.0 bara, preferably smaller than 0.8 bara and more preferably smaller than 0.6 bara.

The process according to this embodiment thus enables to produce a gaseous hydrocarbon product with either a larger fraction of lower boiling hydrocarbons, i.e. shorter chain hydrocarbons, or with a larger fraction of higher boiling hydrocarbons. The lower boiling hydrocarbons are preferred in case the product is to be further cracked in a steam cracker to produce monomers, in particular ethylene, propylene and/or butylene. The feed stock of a steam cracker has indeed preferably a relatively low boiling point. The production of higher hydrocarbons having a larger wax fraction is preferred in case the polyolefin material contains only a relatively small amount of branched polymers so that a wax fraction can be produced consisting mainly of normal paraffins/olefins, which are more valuable than isoparaffins/olefins.

In an embodiment of the process according to the present invention, or according to any one of the preceding embodiments, it comprises the step of feeding part of the liquid phase contained in the first cracking reactor into said final cracking reactor.

An advantage of this embodiment is that only two cracking reactors are required. The first cracking reactor is operated at a lower temperature to optimize the yield of the condensable fraction of the gaseous product whilst the second, in this case the final cracking reactor, is operated at a higher temperature in order to enable to crack the polyolefins completely and also the thermally more stable polymers, such as for example rubbers or biopolymers, that may be included in the polyolefin containing material.

Preferably, a heavier fraction is separated off from said first gaseous cracking product, which heavier fraction is fed into said final cracking reactor.

The heavier fraction can be a fraction that has a too long chain length for being a wax or which has a too high boiling point to be further processed by a steam cracker. Since this heavier fraction has already been cracked, and has thus a shorter chain length than the polyolefin starting material, it is preferably fed to the final cracking reactor wherein it can be cracked more efficiently due to the higher cracking temperature in this final cracking reactor.

In an embodiment of the process according to the present invention, or according to any one of the preceding embodiments, it comprises the step of feeding part of the liquid phase contained in the first cracking reactor into a second cracking reactor which is one of said further cracking reactors different from said final cracking reactor.

An advantage of this embodiment is that also in the second cracking reactor the reaction conditions can be optimized to reduce the production of non-condensable gases during the cracking process. Indeed, it is not necessary to crack the polyolefins and the thermally more stable polymers completely in this second cracking reactor since this will be done in the final cracking reactor.

Preferably, a heavier fraction is separated off from said first gaseous cracking product, which heavier fraction is fed into said second cracking reactor.

The heavier fraction can be a fraction that has a too long chain length for being a wax or which has a too high boiling point to be further processed by a steam cracker. Since this heavier fraction has already been cracked, and has thus a shorter chain length than the polyolefin starting material, it is preferably subjected to harsher cracking conditions, which can be provided in the second cracking reactor, to achieve a more efficient cracking of the heavier fraction. An advantage of feeding the heavier fraction to the second cracking reactor is that it reduces the viscosity of the liquid phase contained in the second cracking reactor. The liquid phase contained in the second cracking reactor has indeed a higher viscosity than the liquid phase contained in the first cracking reactor since it contains more inorganic material and especially also a larger amount of thermally more stable polymers. These are thus diluted by the heavier fraction which is returned to the second cracking reactor.

Also preferably, the gaseous phase is kept in said first cracking reactor at a first pressure and in said second cracking reactor at a second pressure which is higher than said first pressure, said second pressure being preferably at least 0.5 bar, more preferably at least 1.0 bar higher than said first pressure. Alternatively or additionally, the gaseous phase is kept in said second cracking reactor at a pressure higher than 1.0 bara, preferably at a pressure higher than 2.0 bara and more preferably at a pressure higher than 3.0 bara but preferably at a pressure lower than 15.0 bara, more preferably at a pressure lower than 10.0 bara and most preferably at a pressure lower than 5.0 bara.

By the higher pressure in the second cracking reactor re-vaporisation of the heavier phase is suppressed so that this heavier phase is more effectively cracked in the second cracking reactor. An advantage of this embodiment is that no higher cracking temperature has to be applied in the second cracking reactor. The production of non-condensable gases can thus also be reduced in the second cracking reactor. A pressure lower that the maximum pressures is preferred in the first cracking reactor since it has been found that a lower pressure increases the yield of waxes having a longer chain length, in particular a C₃₀ to C₄₀ chain length, and reduces at the same time the short chain fraction, in particular the fraction having a chain length of less than 15 carbon atoms, and also the production of non-condensable gases. Moreover, higher pressures may increase the production of non-condensable gases, in particularly when the first reactor is operated at a relatively high temperature.

Preferably, the liquid phase is kept in said second cracking reactor at a second temperature which is at most 30°C, preferably at most 20°C and more preferably at most 10°C higher than said first temperature.

In this preferred embodiment, the production of non-condensable gases is also reduced in the second cracking reactor.

Preferably, the liquid phase is kept in said second cracking reactor at a second temperature which is at most 10°C lower than said first temperature and which is preferably not lower than said first temperature.

The second cracking reactor is preferably a continuous stirred-tank reactor.

In an embodiment of the process according to the present invention, or according to any one of the preceding embodiments, said first cracking reactor is a continuous stirred-tank reactor

A continuous stirred-tank reactor can be kept continuously at the optimum reaction conditions of temperature and pressure. Moreover, the liquid phase contained therein can be mixed efficiently thereby achieving a better heat transfer and a more uniform temperature. In this way, the product yield can be increased since the formation of non-condensable gases and also char formation can be reduced considerably.

In an embodiment of the process according to the present invention, or according to any one of the preceding embodiments, said final reactor is a stirred-tank reactor.

This reactor can be operated semi-continuous. During the continuous phases, the same advantages can be achieved as described hereabove for the continuous stirred-tank reactors. Also in the final reactor the production of char and of non-condensable gases can thus be reduced. The solid residue produced in the final reactor was found to consist mainly of inorganic compounds, and to contain only a relatively small fraction of char, for example only about 10 to 15 wt.%.

In an embodiment of the process according to the present invention, or according to any one of the preceding embodiments, said material contains at least one component, including in particular said at least one thermally more stable polymer but also a portion of said polyolefin or polyolefins which does not crack in the first reactor, which accumulates in the liquid phase contained in the first cracking reactor, the amount of said part of the liquid phase contained in the first cracking reactor which is fed into one of said one or more further cracking reactors being selected to keep the concentration of said component in the liquid phase contained in the first cracking reactor below a maximum concentration. In another embodiment, said material contains at least one component, including in particular said at least one thermally more stable polymer but also a portion of said polyolefin or polyolefins which does not crack in the first reactor, which accumulates in the liquid phase contained in the first cracking reactor, the amount of said part of the liquid phase contained in the first cracking reactor which is fed into one of said one or more further cracking reactors being selected to keep the dynamic viscosity of the liquid phase in the first cracking reactor, at said first temperature, below 200 mPa.s, preferably below 100 mPa.s and more preferably below 50 mPa.s.

The plastic material may contain different components which accumulate in the liquid phase of the first reactor. First of all it may contain a portion of the polyolefins which do not crack at the temperature of the first reactor. It may also contain polymers, such as rubbers and biopolymers, which are thermally more stable than the polyolefins and which are therefore not cracked, or at least not completely, in the first reactor. The plastic material may also comprise non-crackable components, in particular inorganic components such as fillers, inorganic pigments and impurities such as sand and salts, and also aluminium. Especially so-called polyal comprises a large fraction of aluminium. When these components accumulate in the reactor, the apparent viscosity of the liquid phase contained therein increases. By adjusting the amount of liquid phase which is fed from the first cracking reactor to the next reactor, the accumulation of these components in the first reactor, and thus the viscosity of the liquid phase contained therein, can be kept under control. The liquid phase contained in the first cracking reactor can thus be mixed more efficiently thereby achieving a better heat transfer and a more uniform temperature. In this way, the product yield can be increased since the formation of non-condensable gases and also char formation can be reduced considerably.

Other advantages and particularities of the present invention will become apparent from the following description of some particular embodiments of the process according to the invention. This description is only given by way of example and is not intended to limit the scope of the invention. The reference numerals used in the description relate to the annexed drawings wherein:
Figure 1 is a schematic flow diagram illustrating a preferred embodiment of the process according to the present invention;
Figure 2 is an example of a thermogravimetric analysis (TGA) of the virgin LDPE material used in the experiments; and
Figures 3 to 6 show the compositions of the condensed phases of the gaseous products obtained by cracking the virgin LDPE material under the indicated cracking conditions.

The invention generally relates to a process for cracking a polyolefin containing material, i.e. a plastic material. By the term polyolefins is meant a polymer of an alkene, or a combination of alkenes, in particular of ethylene and/or propylene. The plastic material will usually be a waste material. This waste material may be production waste and/or post-consumer waste. The waste material is in particular a post-consumer waste material from curb-stone collection. The plastic material may thus be polluted with other materials in particular with other plastic materials such as polystyrene and polyvinylchloride. However, it preferably contains at least 60% by dry weight, more preferably at least 70% by dry weight and most preferably at least 80% by dry weight of polyolefins. Usually, it will also contain non-crackable solids, in particular inorganic solids, and one or more thermally more stable polymers such as rubber and biopolymers such as starch based polymers. The waste material is often polluted with biopolymers, even after having washed the waste material, so that the waste material contains at least 0.1 % by dry weight of biopolymers. The biopolymers may originate for example from paper, for example from labels, or from food rests. Biopolymers can be defined as being natural polymers produced by the cells of living organisms. Biopolymers consist in particular of polynucleotides, polypeptides and polysaccharides.

In the process of the present invention the polyolefin containing material is thermally cracked so as to be converted into one or more gaseous cracking products leaving only a solid residue. The complete polyolefin containing material is thus cracked to evaporation leaving only a solid residue in the cracking reactor, in particular in the final cracking reactor. This solid residue consists of non-crackable solids, in particular inorganic substances, contained in the plastic material and char produced by the cracking of the hydrocarbons contained in the plastic material. The gaseous cracking products are condensed to produce a non-condensable fraction, i.e. a gas fraction containing especially C₁ to C₅ hydrocarbons, and a condensable fraction which can be condensed to produce a liquid product containing C₆ and higher hydrocarbons, in particular C₆ to C₃₆, C₃₇, C₃₈, C₃₉ or C₄₀ hydrocarbons (depending on the desired end product), and a small fraction of even somewhat higher hydrocarbons.

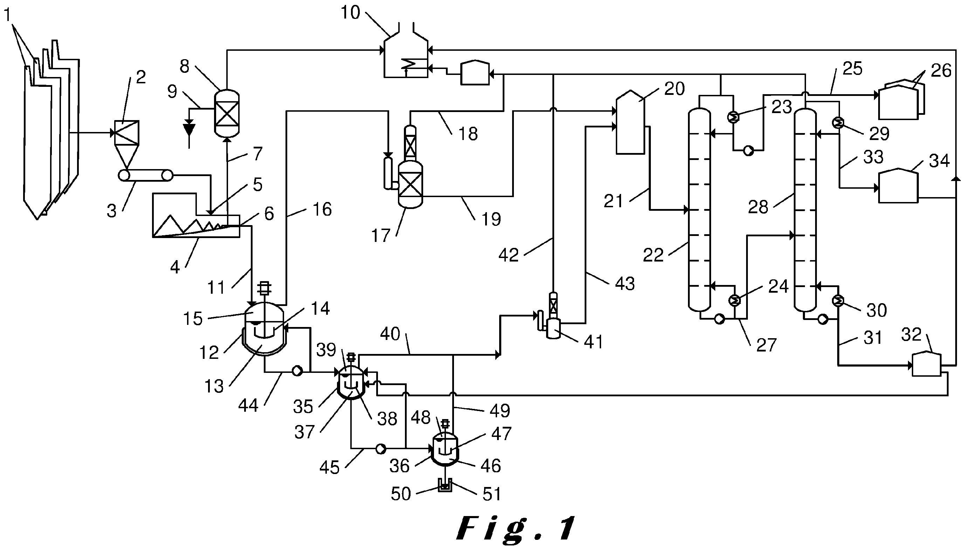

A particular embodiment of the process according to the invention is illustrated in Figure 1. In particular the different pipes, reactors, distillation columns and other components are indicated schematically in this diagram but the necessary valves and pumps have not been indicated and described in detail as a skilled person knows how and where to provide such pumps and valves depending on the pressure conditions which are described herein after.

In a first phase of the process illustrated in Figure 1, the plastic material, in particular plastic waste, is stored and sorted in different silos 1. Via a hopper 2 and a conveyor belt 3 it is fed into an extruder 4 wherein the plastic material is molten. The solid plastic material is fed into an inlet 5 of the extruder 4 and leaves the extruder 4 through its outlet 6. When moving from the inlet 5 to the outlet 6 the plastic material is gradually heated to a temperature of for example 350°C so that it is in a molten state at the outlet 6. During the heating, any moisture will evaporate and halogen containing plastics, such as PVC, are dehydrohalogenated. Moreover, VOC's (volatile organic compounds) may be formed in the extruder. All of these gases/vapours are removed from the extruder 4 via an evacuation pipe 7 to a scrubber 8. In the scrubber 8, the VOC's are separated from the moisture containing the hydrochloric acid, which is collected via pipe 9 whilst the VOC's are fed to an incinerator device 10 to recover the energy contained in those gases. The incinerator device 10 preferably comprises a combined heat and power generator.

The molten plastic material produced in the extruder 4 is supplied via a pipe 11 to a first cracking reactor 12. The supply of molten plastic material into the first reactor 12 is controlled so that this reactor 12 continuously contains a first liquid phase 13 which is heated to a first temperature to be continuously cracked in the first reactor 12. The liquid phase 13 is preferably stirred by means of a stirring device 14 to achieve a uniform temperature in the liquid phase 13. Also any solid particles, in particular inorganic particles, are kept in suspension by means of the stirring device 14. The stirring device 14 preferably comprises a scraper which scrapes along the inner wall of the reactor 12 to scrap off any char that may be formed on the wall of the reactor 12.

The temperatures indicated in the present specification are the average temperature, more particularly the average temperature of the whole liquid phase. When the liquid phase is sufficiently stirred so that it has a substantially uniform temperature, the temperature can be measured on one location in the liquid phase, in particular at a distance from the wall of the reactor.

The first temperature can be selected to maximize the yield of condensable alkanes/alkenes in the gaseous product, i.e. to minimize the production of non-condensable gases and also of char. The temperature of the liquid phase 13 is preferably maintained at a predetermined temperature between 420 and 525°C, more preferably between 430 and 510°C and most preferably between 440°C and 500°C. The first temperature is selected to achieve a cracking of the polyolefins contained in the molten plastic material. To select the optimal cracking temperature, the T₅₀ degradation temperature of the plastic material which is supplied to the first cracking reactor 12 is preferably first measured. The T₅₀ degradation temperature is the temperature at which a weight loss of 50% takes place in a thermogravimetric analysis, at a heating rate of 10°C per minute. The temperature of the liquid phase 13 in the first cracking reactor 12 is then preferably selected to be at most 20°C and preferably at most 5°C lower than this T₅₀ degradation temperature and to be more preferably at least 10°C, most preferably at least 20°C higher than this T₅₀ degradation temperature. It has been found that at such temperatures an effective cracking of the plastic material can be achieved although the polyolefins contained in the plastic material do not need to be cracked completely in the first reactor. At such temperatures the continuous cracking rate is also sufficiently high to reduce the residence time of the gaseous product in the first reactor 12 in order to avoid or reduce the undesired further cracking of the gaseous cracking products in the gaseous phase 15 of the first cracking reactor 12.

In addition to the plastic material one or more additives may be fed into the first reactor 12. Such additives may comprise catalysts but may also comprises substances, such as calcium oxide, for capturing hydrochloric acid. When those additives lower the T₅₀ temperature of the mixture, the T₅₀ degradation temperature is to be measured for the plastic material mixed with the same amount of additives, i.e. having the same concentration of those additives, as in the liquid phase contained in the first reactor 12. The process according to the present invention is however preferably carried out without the addition of catalysts to the first reactor 12.

The gas pressure in the first cracking reactor 12 is selected so that part of the cracking products can evaporate from the liquid phase 13 and produce a first gaseous product forming a first gaseous phase 15 above the liquid phase 13 in the cracking reactor 12. This gas pressure is preferably lower than 7.0 bara, more preferably lower than 5.0 bara and most preferably lower than 3.0 bara or even lower than or equal to 2.0 bara.

With the process according to the present invention a mixture of alkanes/alkenes can be produced having a chain length, after having removed the non-condensable gases therefrom, as from C₆ to C₄₀ or even higher. The highest fraction needs to be removed afterwards since otherwise the boiling point of the mixture would be generally too high for being suitable as feedstock for a steam cracker (use as "naphtha") or since otherwise the mixture would not be a wax mixture (use as "wax"), which may only contain alkanes/alkenes having a chain length up to 38 or at most up to 40 carbon atoms.

Using a pressure below the preferred upper limits enables to produce a mixture of alkanes/alkenes which contain more of a wax fraction (C₂₈ to C₄₀ hydrocarbons). When a fraction of the cracking product will be used as wax, "wax" conditions will preferably be applied in the first reactor 12, in particular a pressure which is sufficiently low, in particular lower than 1.0 bara and more particularly lower than 0.8 bara or even lower than 0.6 bara, for example equal to about 0.5 bara. At such a relatively low pressure, more hydrocarbons having a chain length of more than 40 carbon atoms will arrive in the gaseous phase, so that more of such longer hydrocarbons will later on have to be removed again from the mixture. Preferably, the production of longer chain hydrocarbons is limited by selecting a pressure in the first cracking reactor 12 which is higher than 0.1 bara, preferably higher than 0.3 bara and more preferably higher than 0.4 bara.

When the cracking product will not be used to produce a wax, "naphtha" conditions will preferably be applied in the first reactor 12, in particular a pressure which is higher than 1.0 bara, preferably higher than 1.2 bara and more particularly higher than 1.4 bara, and which is for example equal to about 1.5 bara. At such a relatively high pressure, less hydrocarbons having a chain length of more than 40 (or even less) carbon atoms will arrive in the gaseous phase, so that less of such longer hydrocarbons will later on have to be removed again from the mixture.

The choice between the "naphtha" and the "wax" conditions can be made based on the composition of the plastic material. If the polymer chains of the plastic materials are strongly branched, in particular when the plastic material contains a lot of polypropylene, or also high density polyethylene, the plastic material is preferably cracked under "naphtha" conditions since branched waxes (isoparaffins or iso-olefins) are less valuable than normal paraffins. If the polymers of the plastic materials contains only a small amount of branches, in particular when the plastic material contains no or only a small amount of polypropylene, or also of high density polyethylene, the plastic material is preferably cracked under "wax" conditions since paraffins are more valuable than isoparaffins and especially than "naphtha" (i.e. than feedstock for a steam cracker).

The first gaseous phase 15, i.e. the first product produced in the first cracking reactor 12, is continuously produced in the first reactor 12 and is also continuously removed therefrom, via pipe 16, to keep the first cracking reactor 12 at the first pressure. This first pressure may fluctuate to some extent but is preferably kept substantially constant. The gaseous first product is fed via the pipe 16 to a first quencher 17 which is preferably at a pressure which is substantially equal to the pressure in the first cracking reactor 12. In the quencher 17 the first product is partially condensed and is separated in a non-condensable gas fraction, which contains C₁ to C₅ hydrocarbons, and in a liquid fraction which contains the C₆ to C₄₀ or even higher alkanes/alkenes. The liquid fraction still contains a minor amount of C₅ hydrocarbons. In practice it is possible to keep also most of the C₅ hydrocarbons in the liquid fraction. However, this is not preferred since this would lower the flash point of the liquid fraction thus requiring additional security measures. At the top, the gases are removed via a pipe 18 to the storage tank of the incinerator device 10. The liquid fraction is fed via a pipe 19 to a liquid product buffer tank 20.

From the buffer tank 20 the liquid product is fed via a pipe 21 to a first distillation column 22, which is provided with a condenser 23 and a reboiler 24. The first distillation column 22 is operated under a partial vacuum to enable a more efficient separation between the heavier and the lighter fraction. At the top a top fraction, containing the hydrocarbons having a boiling point of for example lower than 400°C, and containing thus mainly the lighter C₆ to C₂₅ fraction, is removed from the first distillation column 22 and is fed via a pipe 25 to one of the naphtha storage reservoirs 26. The range of carbon chain lengths contained in this naphtha fraction can be modified, in particular the final boiling point thereof, based on the desired specifications of this naphtha fraction. The bottom fraction, which is removed at the bottom of the first distillation column 22 contains higher hydrocarbons having a boiling point higher than 400°C. This bottom fraction is fed via a pipe 27 to a second distillation column 28, which is provided with a condenser 29 and a reboiler 30.

At the bottom of the second distillation column 28 a heavier fraction is removed with a too high boiling point which is fed via a pipe 31 to a reservoir 32. This heavier fraction can be re-cracked by recycling it to one of the additional cracking reactors which are, as described hereinafter, provided downstream the first cracking reactor 12. The heavier fraction comprises for example hydrocarbons having a boiling point higher than 500°C. At the top of the second distillation column 28, a wax fraction is removed which is fed via a pipe 33 to a wax reservoir 34. This wax fraction contains hydrocarbons, i.e. alkanes and alkenes, having boiling points between 400 and 500°C, i.e. carbon chain lengths of between C₂₅ and C₃₄.

It is clear that the operation of the two distillation columns 22 and 28 can be adjusted as a function of the desired composition, i.e. of the carbon chain length range or the boiling point range, of the naphtha product and the wax product. Optionally, the liquid product can be separated in more fractions.

In case the polyolefins contained in the plastic material contain a lot of branches, in particular when they contain a lot of polypropylene and/or HDPE, the first reactor 12 is preferably operated under the "naphtha" conditions, i.e. under a higher pressure, so that the amount of bottom fraction produced by the first distillation column 22 is reduced. This bottom fraction can then be fed directly to the heavy fraction reservoir 32 (via a pipe not indicated in Figure 1), and forms thus the heavy fraction which is to be re-cracked to produce more of the lighter "naphtha" fraction which is stored in the naphtha storage reservoirs 26. In case the polyfins contained in the plastic material are mainly linear, in particular when they contain a lot of LDPE, the first reactor 12 is preferably operated under the "wax" conditions, i.e. under a lower pressure, so that the amount of top (naphtha) fraction produced by the first distillation column 22 is reduced whilst the amount of bottom fraction, containing the wax fraction, is increased.

In accordance with the present invention, the polyolefin containing material is not cracked in one single reactor but it is cracked stepwise in a series of at least two successive cracking reactors. In the embodiment illustrated in Figure 1 the first reactor 12 is followed by a second cracking reactor 35 which, in its turn, is followed by a third reactor which is in this case the last or final reactor 36.

The second reactor 35 is fed via pipe 44 with part of the first liquid phase 13 contained in the first reactor 12. When the plastic material which is fed to the first reactor 12 contains inorganic solids and/or one or more polymers which are thermally more stable than the polyolefins contained therein, these inorganic solids and thermally more stable polymers will accumulate in the liquid phase 13 of the first reactor 12. Also any char produced in the first reactor 12 will accumulate therein even as a portion of the partially cracked polyolefins which doesn't crack further at the relatively low temperature at which the first reactor is operated. The amount of first liquid phase 13 which is fed from the first reactor 12 to the second reactor 35 is controlled to keep the concentration of such products contained in the first cracking reactor 12 below a maximum concentration. The accumulation of thermally more stable polymer products in the first reactor 12 will indeed usually be the limiting factor. However, when inorganic solids, including char, would still accumulate too much in the first reactor 12, the part of the first liquid phase which is fed to the second reactor 35 would have to be increased to keep also the concentration of these inorganic solids below a maximum concentration. This may especially be the case when the plastic material comprises a so-called polyal material, i.e. a combination of polymeric and aluminium layers.

Instead of, or in addition to, keeping the concentration of the thermally more stable polymer products in the first liquid phase 13 below a predetermined maximum concentration, it is also possible to control the amount of the first liquid phase 13 which is fed to the second reactor 35 to keep the dynamic viscosity of the liquid phase in the first cracking reactor, at said first temperature, below 200 mPa.s, preferably below 100 mPa.s and more preferably below 50 mPa.s.

The first cracking reactor 12 is preferably a continuous stirred-tank reactor. In this reactor, the polyolefins contained in the molten plastic material are continuously cracked. Feeding of molten plastic material is, on average, in equilibrium with the production of the first gaseous product, which is removed via the first gaseous phase 15, and with the feeding of first liquid phase 13 to the second reactor 35. In other words, there will always be an amount of liquid phase 13 present in the first reactor 12 although the amount/level thereof may vary to some extent. It was found that such a continuous cracking process, wherein the reactor is continuously filled with liquid phase, enables to considerably reduce the production of non-condensable gases.

The second reactor 35 is fed with liquid phase 13 of the first reactor 12, and preferably also with part of the heavier fraction of the product which is stored in reservoir 32 and which needs to be re-cracked since it still has a too high boiling point. The second reactor 35 contains a second liquid phase 37 which is heated to a second temperature. The liquid phase 37 is preferably stirred by means of a stirring device 38 to achieve a uniform temperature in the liquid phase 37. Also any solid particles, in particular inorganic particles, are kept in suspension by means of the stirring device 38. The stirring device 38 preferably comprises a scraper which scrapes along the inner wall of the reactor 35 to scrap off any char that may be formed on the wall of the reactor 35.

The second temperature can be selected to maximize the yield of condensable alkanes/alkenes in the gaseous product, i.e. to minimize the production of non-condensable gases and also of char. The temperature of the second liquid phase 37 is preferably substantially equal to the first temperature, i.e. to the temperature of the liquid phase 13 in the first cracking reactor 12. It may be somewhat higher, but preferably it is at most 30°C, preferably at most 20°C and more preferably at most 10°C higher than the first temperature. In this way, the same advantages are obtained in the second reactor than in the first reactor, namely an effective cracking of the (partially cracked) polyolefins in the liquid phase 37 of the second reactor 35 whilst avoiding or reducing the production of low molecular weight gases.

The gas pressure in the second cracking reactor 35 is selected so that part of the cracking products can evaporate from the liquid phase 37 and produce a second gaseous product forming a second gaseous phase 39 above the liquid phase 37 in the cracking reactor 35. This gas pressure is preferably lower than 15.0 bara, more preferably lower than 10.0 bara and most preferably lower than 5.0 bara. The pressure of the gaseous phase 39 in the second reactor 35 is preferably higher than 1.0 bara, more preferably higher than 2.0 bara and most preferably higher than 3.0 bara. Preferably, the second gas pressure is higher than the first gas pressure, and is more preferably at least 0.5 bar, most preferably at least 1.0 bar, higher than the first gas pressure. The higher pressure in the second reactor 35 compared to the pressure in the first reactor 12 was found to be advantageous in that most of the polyolefins containedin the second reactor 35 have already been partially cracked in the first reactor 12, more particularly to such an extent that they are more difficult to crack than the initial polyolefin material. Also the heavier fraction which was stored in the reservoir 32 and which needs to be cracked further, is more difficult to crack than the virgin polyolefin material. By applying a higher pressure in the second cracking reactor 35, the partially cracked polyolefin material is prevented from evaporating too quickly, and is thus subjected a longer time to the cracking conditions that prevail in the second reactor 35. Further cracking can thus be achieved whilst keeping the formation of non-condensable gases still to a minimum.

The second gaseous phase 39, i.e. the second product produced in the second cracking reactor 35, is continuously removed from the second cracking reactor 35, via pipe 40, to keep the second cracking reactor 35 at the second pressure. This second pressure may fluctuate to some extent but is preferably kept substantially constant. The gaseous second product is fed via the pipe 40 to a second quencher 41 which is preferably at a pressure which is substantially equal to the pressure in the second cracking reactor 35. In the second quencher 41 the second product is partially condensed and is separated in a non-condensable gas fraction, which contains C₁ to C₅ hydrocarbons, and in a liquid fraction which contains the C₆ to C₄₀ or even higher alkanes/alkenes. At the top, the gases are removed via a pipe 42 to the storage tank of the incinerator device 10. The liquid fraction is fed via a pipe 43 to the liquid product buffer tank 20, where it is combined with the liquid product produced in the first reactor 12.

As described hereabove, the second cracking reactor 35 is followed by the third reactor which is in the embodiment illustrated in Figure 1 the last or final reactor 36.

The final reactor 36 is fed via pipe 45 with part of the second liquid phase 37 contained in the second reactor 35. Just as in the first reactor 12 inorganic solids and thermally more stable polymers or partially cracked polyolefins will accumulate in the liquid phase 37 of the second reactor 35. Also any char produced in the second reactor 35 will accumulate therein. The amount of second liquid phase 37 which is fed from the second reactor 35 to the third or final reactor 36 is controlled to keep the concentration of the thermally more stable polymer products in the liquid phase 37 contained in the second cracking reactor 35 below a maximum concentration. The accumulation of thermally more stable polymer products in the second reactor 35 will indeed usually be the limiting factor. However, when inorganic solids, including char, would still accumulate too much in the second reactor 35, the part of the second liquid phase which is fed to the final reactor 36 would have to be increased to keep also the concentration of these inorganic solids below a maximum concentration. This will especially be the case when the plastic material contains polyal.

Instead of, or in addition to, keeping the concentration of the thermally more stable polymers in the second liquid phase 37 below a predetermined maximum concentration, it is also possible to control the amount of the second liquid phase 37 which is fed to the final reactor 36 to keep the dynamic viscosity of the liquid phase in the second cracking reactor, at said second temperature, below 200 mPa.s, preferably below 100 mPa.s and more preferably below 50 mPa.s.

The second cracking reactor 35 is preferably a continuous stirred-tank reactor. In this reactor, the polyolefins, which are already partially cracked, are continuously cracked further. Feeding of liquid phase 13 from the first reactor 12 and/or feeding of heavier phase from the reservoir 32 is, on average, in equilibrium with the production of the second gaseous product, which is removed via the second gaseous phase 39, and with the feeding of second liquid phase 37 to the final reactor 36. In other words, there will always be an amount of liquid phase 37 present in the second reactor 35 although the amount/level thereof may vary to some extent. Again it was found that such a continuous cracking process, wherein the reactor is continuously filled with liquid phase, enables to considerably reduce the production of non-condensable gases.

The final reactor 36 is fed with liquid phase 37 from the second reactor 35. It can also be fed with part of the heavier fraction of the product which is stored in reservoir 32 and which needs to be re-cracked. This heavier fraction is however preferably re-cracked in the second reactor 35. In the second reactor 35 the temperature can indeed be controlled to minimize the production of non-condensable gases. Moreover, the heavier fraction can be used in the second reactor 35 to reduce the viscosity of the second liquid phase 37 and/or to reduce the concentration of inorganic material present therein.

The final reactor 36 contains a final liquid phase 46 which is heated to a final temperature. The final temperature is the temperature at which the liquid phase in the final reactor 36 is kept as long as liquid phase in fed into the final reactor or in other words before feeding of liquid phase in the final reactor 36 is interrupted, as further described hereafter. The final liquid phase 46 is preferably a stirred-tank reactor which is stirred by means of a stirring device 47 to achieve a uniform temperature in the liquid phase 46. Also any solid particles, in particular inorganic particles, are kept in suspension by means of the stirring device 47. The stirring device 47 preferably comprises a scraper which scrapes along the inner wall of the final reactor 36 to scrap off any char that may be formed on the wall of the reactor 36.

The final temperature is selected to further crack the polyolefines which have been cracked only partially in the previous reactors and optionally also the more thermally stable polymers, or a portion thereof, which are present in the plastic material and which accumulate in the first and in the second reactor. The final temperature is higher than the first temperature, i.e. than the temperature of the liquid phase 13 in the first cracking reactor 12, and is preferably also higher than the second temperature, i.e. than the temperature of the liquid phase 37 in the second cracking reactor 35. The final temperature is at least 20°C higher than the first temperature. This enables a more efficient and more complete cracking of the different polymers/olefins in the final reactor.

The final temperature can again be selected to maximize the yield of condensable alkanes/alkenes in the gaseous product, i.e. to minimize the production of non-condensable gases and also of char. The temperature of the final liquid phase 46 is preferably at most 50°C, preferably at most 40°C and more preferably at most 30°C higher than the first temperature. In this way, the same advantages are obtained, although to a lesser extent, during the continuous cracking phase in the final reactor than in the first and the second reactor, namely an (even more) effective cracking of the (partially cracked) polyolefins and optionally of the thermally more stable polymers in the liquid phase 46 of the final reactor 36 whilst keeping the production of low molecular weight gases to a reduced level.

The gas pressure in the final cracking reactor 36 is selected so that part of the cracking products can evaporate from the liquid phase 46 and produce a final gaseous product forming a final gaseous phase 48 above the liquid phase 46 in the cracking reactor 36. This gas pressure is preferably lower than 15.0 bara, more preferably lower than 10.0 bara and most preferably lower than 5.0 bara. The pressure of the gaseous phase 39 in the second reactor 35 is preferably higher than 1.0 bara, more preferably higher than 2.0 bara and most preferably higher than 3.0 bara. It may for example be equal to the pressure in the second reactor 35, but it may also be lower, for example equal to the pressure in the first reactor 12.

When the pressure in the final reactor 36 is lower than in the second reactor 35, liquid phase can be fed from the second reactor 35 to the final reactor 36 by the pressure difference between these two reactors 35 and 36. The gaseous product produced in the final reactor 36 is then preferably fed to the first quencher 17 (not shown in Figure 1) since the first quencher 17 is also at a lower pressure.

In the embodiment illustrated in Figure 1, wherein the final reactor is at a higher pressure than the first reactor, the final gaseous phase 48, i.e. the final product produced in the final cracking reactor 36, is removed from the final cracking reactor 36, via pipe 49, to keep the final cracking reactor 36 at the final pressure. This final pressure may fluctuate to some extent but is preferably kept substantially constant. The gaseous final product is fed via the pipe 49, together with the gaseous second product, to the second quencher 41 which is preferably at a pressure which is substantially equal to the pressure in the final cracking reactor 36. In the second quencher 41 the final product is partially condensed and is separated, together with the second product, in a non-condensable gas fraction, which contains C₁ to C₅ hydrocarbons, and in a liquid fraction which contains the C₆ to C₄₀ or even higher alkanes/alkenes. At the top, the gases are removed via a pipe 42 to the storage tank of the incinerator device 10. The liquid fraction is fed via a pipe 43 to the liquid product buffer tank 20, where it is combined with the liquid product produced in the first reactor 12.

In the final reactor 36 at least the portion of the polyolefins which has not been cracked in the previous reactors, and optionally also the thermally more stable polymers, are also cracked to produce the final gaseous product but the non-crackable material, in particular the inorganic material, and the char produced in the different reactors still continue to accumulate. To be able to remove the inorganic material and the char from the final reactor when they have reached a predetermined concentration, feeding of liquid phase 37 from the second reactor 35 into the final reactor 36 (and of any other material such as heavier fraction from the reservoir 32) is interrupted at predetermined points in time while the liquid phase 46 contained in the final cracking reactor 36 is further cracked until this liquid phase 46 has disappeared and has been converted into a solid residue 50. This solid residue is preferably substantially free of hydrocarbons. Once the solid residue 50 has been formed, it can be scraped relatively easily out of the final reactor 36. It is then stored in a solid residue container 51. After having removed the solid residue 50 form the final reactor 36, feeding of liquid phase 37 from the second reactor 35 to the final reactor 36 is resumed.

In order to crack the polymers completely in the final reactor so as to form a bone dry solid residue instead of some tar or sticky material, a higher temperature can be provided in the final reactor, especially after having interrupted feeding the liquid phase therein. Preferably, after having interrupted feeding of liquid phase in the final cracking reactor 36 the liquid phase 46 contained therein is further cracked at a temperature which is higher than 525°C, preferably higher than 535°C and more preferably higher than 545°C or which is additionally or alternatively at least 30°C, preferably at least 40°C and most preferably at least 50°C higher than the first temperature. At these temperatures, a bone dry solid residue can be obtained rather quickly. Although in this final phase more non-condensable gases are produced, this is only for a very limited portion of the total amount of cracked material. The higher temperatures in this final phase, which enable to keep the amount of solid residue to a minimum and to produce a solid residue which can be easily handled and removed from the final reactor, have thus only a very small effect on the total yield of liquid product.

Preferably, the temperature at which the liquid phase contained in the final cracking reactor 36 is further cracked after having interrupted feeding of liquid phase in the final cracking reactor 36 is lower than 650°C and preferably lower than 600°C. Less energy is required to heat the final reactor to these temperatures and especially the final reactor 36 can be cooled more quickly to the final temperature when resuming feeding of liquid phase into the final reactor.

In an alternative embodiment, which has not been illustrated in the drawings, the second reactor 35 can be omitted. In this embodiment, part of the first liquid phase 15 contained in the first reactor 12 is fed directly to the final cracking reactor 36. The heavier fraction contained in reservoir 32 can be fed either to the first cracking reactor 12, but preferably to the final cracking reactor 36. The temperature of the liquid phase 46 in the final reactor 36 is preferably as described hereabove (for the embodiment with three reactors) for the final reactor 36 whilst the pressure of the gaseous phase 48 in the final reactor 36 is in this alternative embodiment preferably as described hereabove (for the embodiment with three reactors) for the first reactor 35. In this way, only one quencher is required since the gaseous product produced in the final reactor can easily by fed, under the same pressure, to the first quencher 17.

The following experiments show the effects of the cracking conditions that may be applied in the different cracking reactors of the above described embodiments.

### Experiments

### Polyolefin containing plastic material

The following experiments were done with virgin LDPE (low density polyethylene) material. A thermogravimetric analysis (TGA) was done with this material at a heating rate which was sufficiently slow in the temperature range wherein the material decomposed, in particular at a heating rate which is at most 10°C per minute to be sufficiently accurate. In the present case the initial heating rate was higher until a temperature of 400°C was reached.

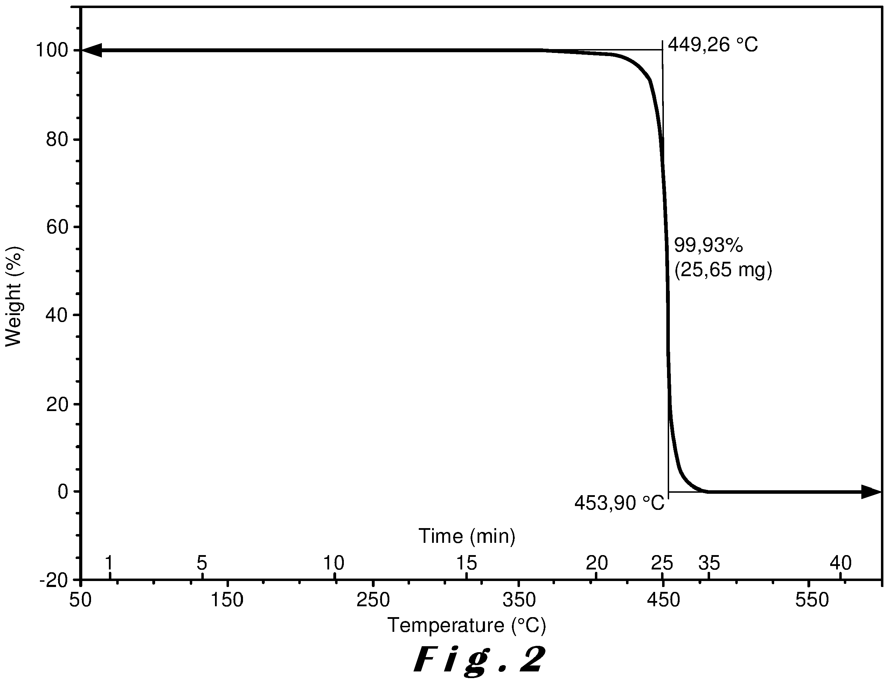

Figure 2 shows the TGA curve that was obtained. The T₅₀ degradation temperature, i.e. the temperature at which 50 wt.% of the material was lost, was equal to about 451 °C.

### Cracking experiments

The LDPE material was fed to an extruder wherein the material was molten and brought to a temperature of 350°C. The flow rate through the extruder was comprised between 2 and 3 kg/h.

The LDPE melt leaving the extruder at 350°C was continuously fed into a cracking reactor. The cracking reactor was a continuously stirred tank reactor having a volume of 5L. Depending on the processing conditions in the reactor, the holdup, i.e. the liquid phase, fluctuated between 0.5 and 2L. The holdup consisted of molten, partially cracked polymers. Heating of the reactor was provided externally, via heating rods that radiated heat to the stainless steel reactor body. Temperature in the reactor was measured in the liquid phase and kept at the desired value.

Initially the reactor was purged with nitrogen. After that a predetermined pressure was provided in the reactor by means of a vacuum pump for creating a vacuum or by injection of nitrogen gas to create a pressure in the reactor. The gas pressure in the reactor was measured in the upper part of reactor effectively indicating the pressure of the gaseous phase in the reactor. During feeding and cracking of the plastics melt, the pressure was maintained constant.

The feeding of the plastics melt was done for a couple of hours. Samples were taken about every 30 minutes and the analysis results indicated below are an average of 3 samples. The samples were taken during the continuous operation of the reactor.

The gaseous product formed in the reactor was routed via a set of 3 condensers kept at different temperatures to enable effective condensation of the gaseous product. The first condensation was done at a higher temperature within the range of 40-60°C where the following two condensation steps were performed at a lower temperature between -10° and 20°C. The pressure in the condensation train was the same as the pressure in the reactor. The liquid fractions collected at the different condensation stages were mixed together and were subsequently analysed as a whole.

### Broad range pressure experiments

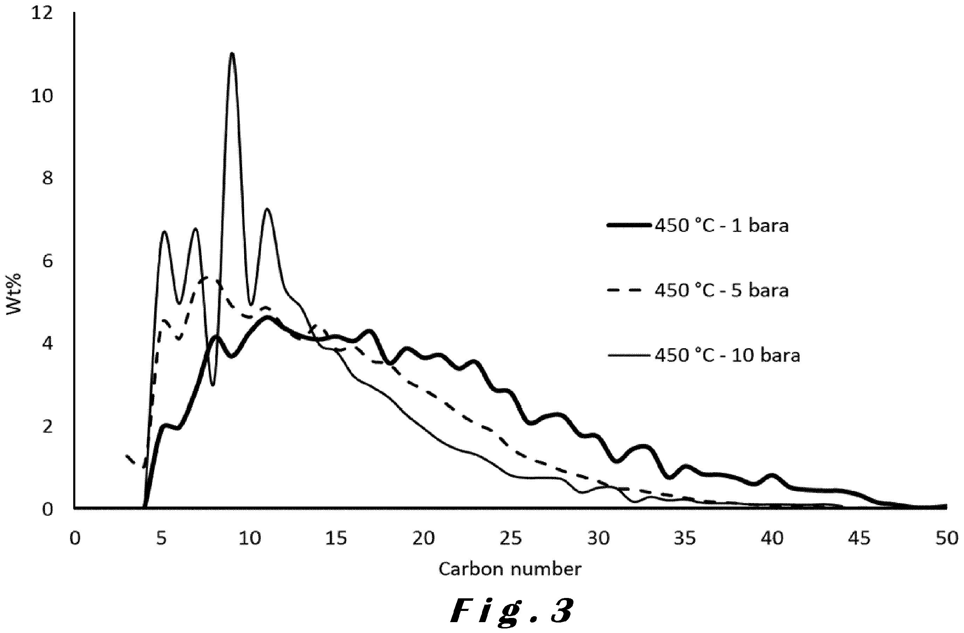

A first series of experiments were done at a temperature of 450°C of the liquid phase contained in the cracking reactor. Cracking of the LDPE material was done at pressures of 1, 5 and 10 bara. The compositions of the condensed phases of the gaseous products are indicated in Figure 3. In this figure, and in the next figures, the percent by weight was indicated for each carbon chain length.

First of all it can be seen that the condensed phases contained a relatively high amount of a higher molecular weight hydrocarbons, in particular much more hydrocarbons having a boiling point higher than 350°C than for example the amount (only about 20% of the liquid product) disclosed in the article of Walendziewski. In the process described in this article, the plastic material was completely cracked to char in the first reactor whilst in the present process an amount of liquid phase is continuously kept in the cracking reactor.

As appears from the TGA shown in Figure 2, the plastic material is not completely cracked at 450°C. In order to be able to reduce the amount of residue which remains in the reactor after the experiment, and especially also in order to be able to produce a bone dry residue which can be removed easily from the reactor, the temperature in the reactor was increased at the end of the experiment to a temperature of about 550°C, and the reactor was kept at this temperature until a bone dry residue was obtained. During this last phase, no samples of the produced gaseous products were taken.

In Figure 3 it can be seen that more C₆ to C₂₄ naphtha fraction is produced when the pressure is increased in the reactor and that more C₂₅ to C₄₀ wax fraction is produced when a lower pressure is applied in the reactor. The relative amount of wax fraction increases from 10 to 5 bara, and from 5 to 1 bara.

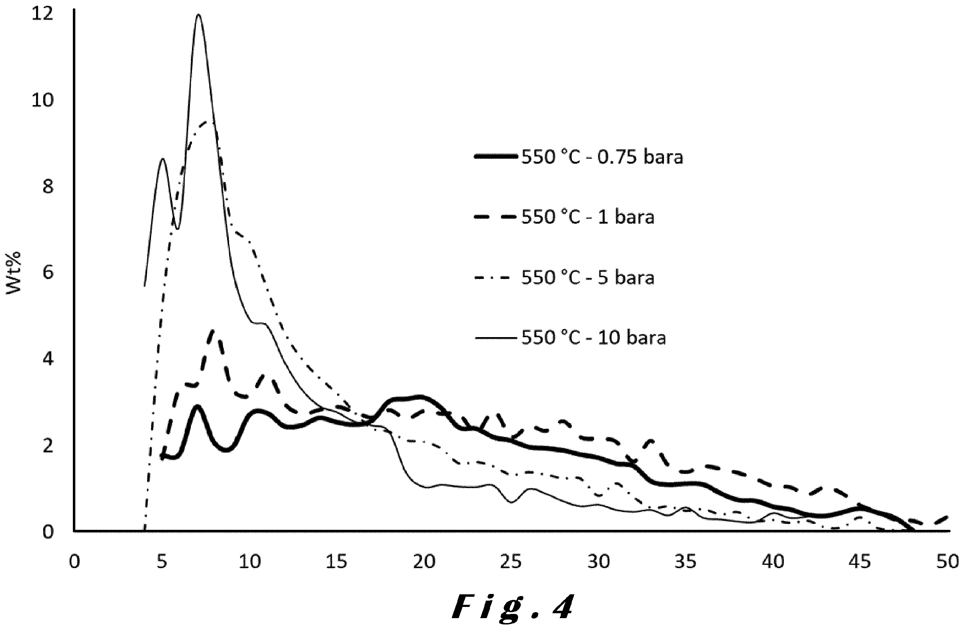

A second series of experiments were done at a temperature of 550°C of the liquid phase contained in the cracking reactor. The compositions of the condensed phases of the gaseous products are indicated in Figure 4.

It can be seen that more C₆ to C₂₄ naphtha fraction is produced when the pressure is increased in the reactor from 0.75 to 10 bara and that more C₂₅ to C₄₀ wax fraction is produced when lowering the pressure from 10 to 5 bara, and from 5 to 1 or 0.75 bara.

### Narrower range pressure experiments

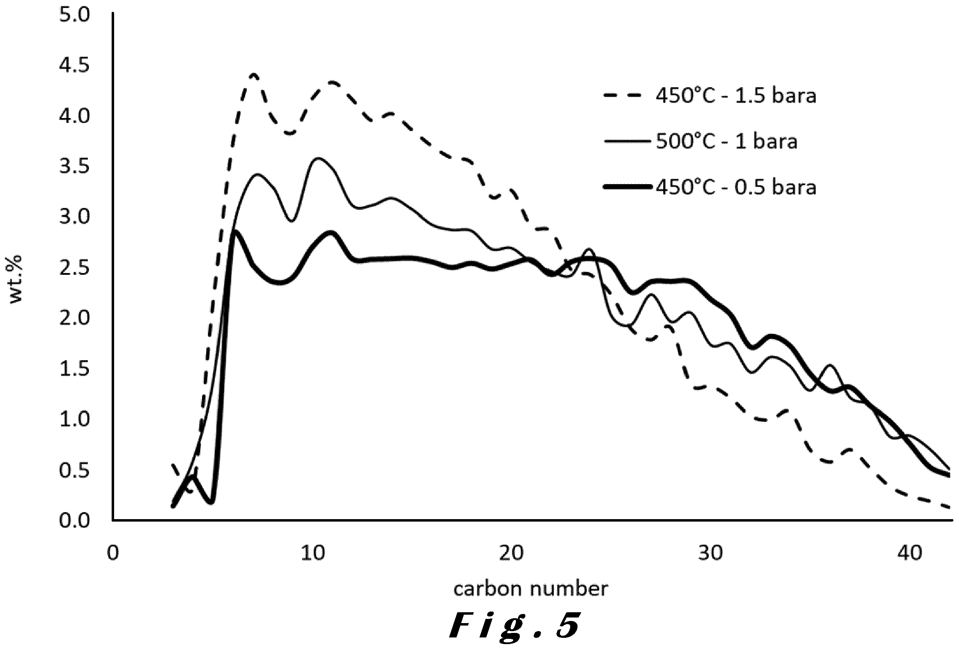

A first series of experiments were done at a temperature of 450°C and at a temperature of 500°C of the liquid phase contained in the cracking reactor. Cracking of the LDPE material was done at pressures of 0.5, 1 and 1.5 bara. The compositions of the condensed phases of the gaseous products are indicated in Figure 5.

It can be seen again that more C₆ to C₂₄ naphtha fraction is produced when the pressure is increased in the reactor and that more C₂₅ to C₄₀ wax fraction is produced when a lower pressure is applied in the reactor. Apparently, an increase of the temperature from 450°C to 500°C has no or only a small effect on the composition of the liquid, condensed product.

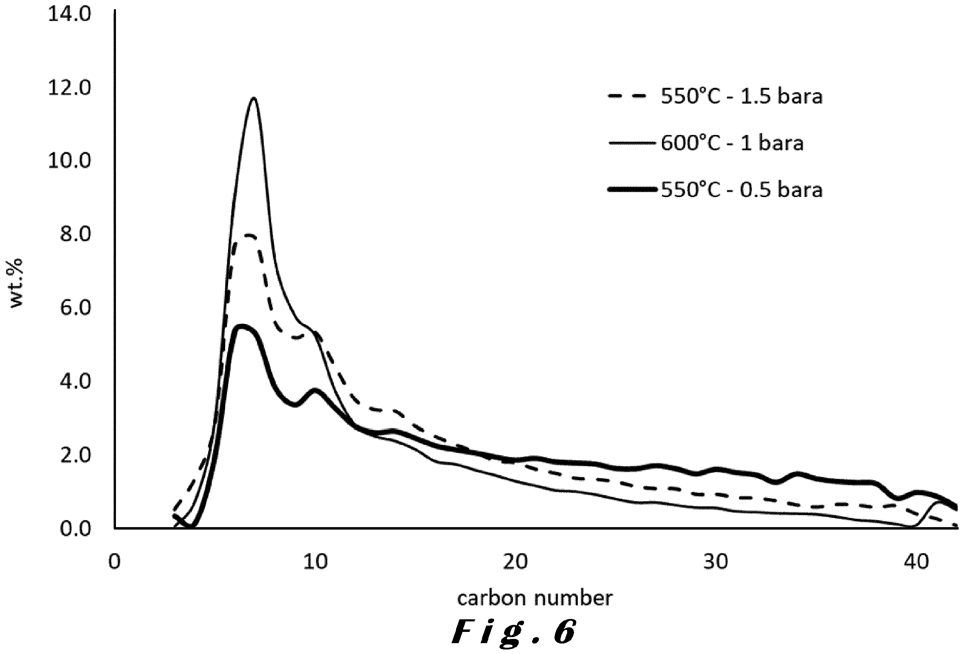

A second series of experiments were done at a temperature of 550°C and at a temperature of 600°C of the liquid phase contained in the cracking reactor. Cracking of the LDPE material was done at pressures of 0.5, 1 and 1.5 bara. The compositions of the condensed phases of the gaseous products are indicated in Figure 6.

It can be seen that more C₆ to C₂₄ naphtha fraction is produced when the pressure is increased, at 550°C, from 0.5 to 1.5 bara and that more C₂₅ to C₄₀ wax fraction is produced when the pressure is decreased, at 550°C, from 1.5 to 0.5 bara. An increase of the temperature from 550°C to 600°C seems to have a considerable effect on the relative amounts of naphtha and wax fraction that are produced. Notwithstanding the higher volatility of the wax fraction at a higher temperature of 600°C, it appears that the product comprises less wax fraction by increasing the temperature from 550°C to 600°C. On the other hand, the product contains much more lower hydrocarbons when the temperature is increased from 550°C to 600°C. Apparently, at higher temperature, the polyolefins are cracked into smaller molecules at such higher temperatures.

Further information about the composition of the products obtained in the cracking experiments illustrated in Figures 5 and 6 are given in Table 1.

**Table 1: Experimental conditions, percent by weight of the different fractions of the gaseous products obtained under these conditions, and the condensed liquid yields and the weight average carbon numbers of the C₆ to C₄₀ fraction contained in the condensed liquid products.**

| Boiling Temp. (°C) | 450°C | 500°C | 450°C | 550°C | 550°C | 600°C |
|---|---|---|---|---|---|---|
| | 0.5 bara | 1.0 bara | 1.5 bara | 0.5 bara | 1.5 bara | 1.0 bara |
| < 40°C | 10.0 | 8.0 | 9.0 | 29.0 | 35.0 | 49.0 |
| 40 - 270 | 27.6 | 33.6 | 40.2 | 31.7 | 39.6 | 36.6 |
| 270 - 350 | 17.4 | 18.6 | 21.5 | 11.4 | 10.4 | 6.8 |
| 350 - 400 | 11.6 | 11.0 | 10.8 | 6.5 | 4.6 | 2.8 |
| 400 - 500 | 27.5 | 22.9 | 16.3 | 16.2 | 8.4 | 4.4 |
| >500 | 5.9 | 5.7 | 2.2 | 5.2 | 2.0 | 0.4 |
| Liquid yield | 90% | 92% | 91% | 71% | 65% | 51% |
| Wt. av. C number | 19 - 20 | 17 - 18 | 15 - 16 | 16 - 17 | 11 - 12 | 9 - 10 |

First of all it is important to notice that at higher temperatures, namely at temperatures of 550°C and higher, the production of non-condensable gases, i.e. gases having a boiling point lower than 40°C, is considerably increased, compared to the production of those gases at 450°C and 500°C. This results in a corresponding reduction of the yield of condensed liquid. This yield decreases from about 90 - 92% to about 65 - 70%, at 550°C, and to about 50%, at 600°C.

The effect of the change from "wax" conditions to "naphtha" conditions can also be seen clearly in Table 1. In this table, the weight average carbon number calculated over the C₆ - C₄₀ fraction has indeed also been indicated. The weight average carbon number indicates the chain length which is in the middle, i.e. 50 wt.% of the C₆ - C₄₀ fraction has a lower carbon number whilst 50 wt.% of the C₆ - C₄₀ fraction has a higher carbon number. In Table 1 the two carbon numbers, between which the weight average carbon number is comprised, are indicated.

It can be seen that at temperatures of 450°C and 550°C, the weight average carbon number substantially increases when the pressure is lowered from 1.5 bara to 0.5 bara.

An additional experiment was done at a temperature of about 490°C and a pressure of 2 bara. The liquid yield in this experiment was only about 82 %. Especially when working under "naphta" conditions, i.e. at higher pressures, it appears that lower temperatures are advantageous, i.e. temperatures closer to the T₅₀ degradation temperature, in order to reduce the production of non-condensable gases.

## Claims

1. A process for cracking a polyolefin containing material, in particular a polyolefin containing material which contains at least 60 % by dry weight of one or more polyolefins and optionally at least one thermally more stable polymer, in which process said material is thermally cracked to be converted into one or more gaseous cracking products thereby leaving a solid residue (50),
**characterised in that**
said material is cracked stepwise in a series of at least two successive cracking reactors (12, 35, 36) which each contain a liquid phase (13, 38, 46) and a gaseous phase (15, 39, 48), the liquid phase being cracked in each of the cracking reactors to produce a gaseous cracking product which is removed from the cracking reactor during the production thereof, said series of cracking reactors comprising a first cracking reactor (12) and one or more further cracking reactors (35, 36), including a final cracking reactor (36), the first cracking reactor (12) being fed with said polyolefin containing material and said one or more further cracking reactors (35, 36) being each fed at least with part of the liquid phase contained in the previous cracking reactor of said series,
in which process:
- the liquid phase (13) contained in said first cracking reactor (12) is kept at a first temperature of between 420°C and 525°C and is cracked in said first cracking reactor (12) at said first temperature to produce a first gaseous cracking product;
- the first gaseous cracking product is removed from the first cracking reactor (12) during the production thereof and is subsequently at least partially condensed;
- the liquid phase (46) contained in said final cracking reactor (36) is kept at a final temperature, which is at least 20°C higher than said first temperature, and is cracked in said final cracking reactor (36) at said final temperature to produce a final gaseous cracking product; and
- the final gaseous cracking product is removed from the final cracking reactor (36) during the production thereof and is subsequently at least partially condensed,
in which process:
- feeding of liquid phase from said previous cracking reactor into the final cracking reactor (36) is interrupted at predetermined points in time while the liquid phase (46) contained in said final cracking reactor (36) is further cracked until the liquid phase (46) contained in said final cracking reactor (36) is converted into said solid residue (50);
- the solid residue (50) is removed from the final cracking reactor (36); and
- after having removed the solid residue (50) from the final cracking reactor (36), feeding of liquid phase from said previous cracking reactor into the final cracking reactor (36) is resumed.

2. The process according to claim 1, **characterised in that** after having interrupted feeding of liquid phase in the final cracking reactor (36) the liquid phase contained therein is further cracked at a temperature which is higher than 525°C, preferably higher than 535°C and more preferably higher than 545°C.

3. The process according to claim 1 or 2, **characterised in that** after having interrupted feeding of liquid phase in the final cracking reactor (36) the liquid phase contained therein is further cracked at a temperature which is at least 30°C, preferably at least 40°C and more preferably at least 50°C higher than said first temperature.

4. The process according to any one of the claims 1 to 3, **characterised in that** after having interrupted feeding of liquid phase in the final cracking reactor (36) the liquid phase contained therein is further cracked at a temperature which is lower than 650°C and preferably lower than 600°C.

5. The process according to any one of the claims 1 to 4, **characterised in that** before having interrupted feeding of liquid phase in the final cracking reactor (36) the liquid phase contained therein is kept at said final temperature which is at most 50°C, preferably at most 40°C and more preferably at most 30°C higher than said first temperature.

6. The process according to any one of the claims 1 to 5, **characterised in that** before having interrupted feeding of liquid phase in the final cracking reactor (36) the liquid phase contained therein is kept at said final temperature which is at least 20°C higher than said first temperature.

7. The process according to any one of the claims 1 to 6, **characterised in that** said polyolefin containing material contains one or more biopolymers, in particular in an amount of at least 0.1 % by dry weight, and/or said polyolefin containing material is a post-consumer waste material, in particular waste material from curb-side collection.

8. The process according to any one of the claims 1 to 7, **characterised in that** said solid residue is substantially free of hydrocarbons.

9. The process according to any one of the claims 1 to 8, **characterised in that** said first temperature is lower than or equal to 510°C and preferably lower than or equal to 500°C.

10. The process according to any one of the claims 1 to 9, **characterised in that** said first temperature is higher than 430°C and preferably higher than 440°C.

11. The process according to any one of the claims 1 to 10, **characterised in that** said material has a T₅₀ degradation temperature at which a weight loss of 50% takes place in a thermogravimetric analysis, at a heating rate of 10°C per minute, said first temperature being at most 20°C and preferably at most 5°C lower than said T₅₀ degradation temperature and is more preferably at least 10°C, most preferably at least 20°C higher than said T₅₀ degradation temperature.

12. The process according to any one of the claims 1 to 11, **characterised in that** the gaseous phase (15) is kept in said first cracking reactor (12) at a first pressure which is lower than 7.0 bara, preferably lower than 5.0 bara and more preferably lower than 3.0 bara, said first pressure being preferably higher than 0.1 bara, more preferably higher than 0.3 bara and most preferably higher than 0.4 bara.

13. The process according to any one of the claims 1 to 12, **characterised in that** the gaseous phase (15) is kept in said first cracking reactor (12) at a first pressure, the first cracking reactor (12) being operated at at least two different values of said first pressure, including in particular at least one lower value so that said first gaseous product has a first weight average carbon number and at least one higher value, which is higher than said lower value, so that said first gaseous product has a second weight average carbon number which is lower than said first weight average carbon number.

14. The process according to claim 13, **characterised in that** said higher value of said first pressure is larger than 1.0 bara, preferably larger than 1.2 bara and more preferably larger than 1.4 bara.

15. The process according to claim 13 or 14, **characterised in that** said lower value of said first pressure is smaller than 1.0 bara, preferably smaller than 0.8 bara and more preferably smaller than 0.6 bara.

16. The process according to any one of the claims 1 to 15, **characterised in that** it comprises the step of feeding part of the liquid phase (13) contained in the first cracking reactor (12) into said final cracking reactor (36).

17. The process according to claim 16, **characterised in that** a heavier fraction is separated off from said first gaseous cracking product, which heavier fraction is fed into said final cracking reactor (36).

18. The process according to any one of the claims 1 to 15, **characterised in that** it comprises the step of feeding part of the liquid phase (13) contained in the first cracking reactor (12) into a second cracking reactor (35) which is one of said further cracking reactors different from said final cracking reactor (36).

19. The process according to claim 18, **characterised in that** a heavier fraction is separated off from said first gaseous cracking product, which heavier fraction is fed into said second cracking reactor (35).

20. The process according to claim 18 or 19, **characterised in that** the gaseous phase (15) is kept in said first cracking reactor (12) at a first pressure and the gaseous phase (39) is kept in said second cracking reactor (35) at a second pressure which is higher than said first pressure, said second pressure being preferably at least 0.5 bar, more preferably at least 1.0 bar higher than said first pressure.

21. The process according to any one of the claims 18 to 20, **characterised in that** the gaseous phase (39) is kept in said second cracking reactor (35) at a pressure higher than 1.0 bara, preferably at a pressure higher than 2.0 bara and more preferably at a pressure higher than 3.0 bara but preferably at a pressure lower than 15.0 bara, more preferably at a pressure lower than 10.0 bara and most preferably at a pressure lower than 5.0 bara.

22. The process according to any one of the claims 18 to 21, **characterised in that** the liquid phase (37) is kept in said second cracking reactor (35) at a second temperature which is at most 30°C, preferably at most 20°C and more preferably at most 10°C higher than said first temperature.

23. The process according to any one of the claims 18 to 22, **characterised in that** said second cracking reactor (35) is a continuous stirred-tank reactor.

24. The process according to any one of the claims 1 to 23, **characterised in that** said material contains at least one component, including in particular said at least one thermally more stable polymer, which accumulates in the liquid phase (13) contained in the first cracking reactor (12), the amount of said part of the liquid phase (13) contained in the first cracking reactor (12) which is fed into one of said one or more further cracking reactors (35, 36) being selected to keep the concentration of said component in the liquid phase (13) contained in the first cracking reactor (12) below a maximum concentration.

25. The process according to any one of the claims 1 to 24, **characterised in that** said material contains at least one component, including in particular said at least one thermally more stable polymer, which accumulates in the liquid phase (13) contained in the first cracking reactor (12), the amount of said part of the liquid phase (13) contained in the first cracking reactor (12) which is fed into one of said one or more further cracking reactors (35, 36) being selected to keep the dynamic viscosity of the liquid phase (13) in the first cracking reactor (12), at said first temperature, below 200 mPa.s, preferably below 100 mPa.s and more preferably below 50 mPa.s.

26. The process according to any one of the claims 1 to 25, **characterised in that** said first cracking reactor (12) is a continuous stirred-tank reactor.

27. The process according to any one of the claims 1 to 26, **characterised in that** said final reactor (36) is a stirred-tank reactor.

## Patentansprüche

1. Ein Verfahren zum Cracken eines polyolefinhaltigen Materials, insbesondere eines polyolefinhaltigen Materials, welches mindestens 60 % Trockenmasse eines oder mehrerer Polyolefine und optional mindestens ein thermisch stabileres Polymer enthält, wobei in diesem Verfahren das erwähnte Material thermisch gecrackt wird, um in ein oder mehrere gasförmige Crackprodukte umgewandelt zu werden, wobei ein fester Rückstand (50) übrig bleibt,
**dadurch gekennzeichnet, dass**
das erwähnte Material schrittweise in einer Reihe von mindestens zwei aufeinanderfolgenden Crackreaktoren (12, 35, 36) gecrackt wird, die jeweils eine flüssige Phase (13, 38, 46) und eine gasförmige Phase (15, 39, 48) enthalten, wobei die flüssige Phase in jedem der Crackreaktoren gecrackt wird, um ein gasförmiges Crackprodukt herzustellen, das während dessen Herstellung aus dem Crackreaktor entfernt wird, wobei die erwähnte Reihe von Crackreaktoren einen ersten Crackreaktor (12) und einen oder mehrere weitere Crackreaktoren (35, 36) umfasst, einschließlich eines letzten Crackreaktors (36), wobei dem ersten Crackreaktor (12) das erwähnte polyolefinhaltige Material zugeführt wird und dem erwähnten einen oder den erwähnten mehreren weiteren Crackreaktoren (35, 36) jeweils zumindest ein Teil der im vorigen Crackreaktor der erwähnten Reihe enthaltenen flüssigen Phase zugeführt wird,
wobei in diesem Verfahren:
- die flüssige Phase (13), die im erwähnten ersten Crackreaktor (12) enthalten ist, auf einer ersten Temperatur von zwischen 420 °C und 525 °C gehalten wird und im erwähnten ersten Crackreaktor (12) auf der erwähnten ersten Temperatur gecrackt wird, um ein erstes gasförmiges Crackprodukt herzustellen;
- das erste gasförmige Crackprodukt während seiner Herstellung aus dem ersten Crackreaktor (12) entfernt und anschließend zumindest teilweise kondensiert wird;
- die flüssige Phase (46), die im erwähnten letzten Crackreaktor (36) enthalten ist, auf einer letzten Temperatur gehalten wird, die mindestens 20 °C höher ist als die erwähnte erste Temperatur, und im erwähnten letzten Crackreaktor (36) auf der erwähnten letzten Temperatur gecrackt wird, um ein letztes gasförmiges Crackprodukt herzustellen; und
- das letzte gasförmige Crackprodukt während seiner Herstellung aus dem letzten Crackreaktor (36) entfernt und anschließend zumindest teilweise kondensiert wird,
wobei in diesem Verfahren:
- die Zuführung der flüssigen Phase aus dem erwähnten vorigen Crackreaktor in den letzten Crackreaktor (36) an voreingestellten Zeitpunkten unterbrochen wird, während die flüssige Phase (46), die im erwähnten letzten Crackreaktor (36) enthalten ist, weiter gecrackt wird, bis die flüssige Phase (46), die im erwähnten letzten Crackreaktor (36) enthalten ist, in den erwähnten festen Rückstand (50) umgesetzt ist;
- der feste Rückstand (50) aus dem letzten Crackreaktor (36) entfernt wird; und
- nach dem Entfernen des festen Rückstands (50) aus dem letzten Crackreaktor (36) die Zuführung von flüssiger Phase aus dem erwähnten vorigen Crackreaktor in den letzten Crackreaktor (36) wieder aufgenommen wird.

2. Das Verfahren nach Anspruch 1, **dadurch gekennzeichnet, dass** nach dem Unterbrechen der Zuführung von flüssiger Phase in den letzten Crackreaktor (36) die darin enthaltene flüssige Phase auf einer Temperatur, die höher ist als 525 °C, bevorzugt höher als 535 °C und noch besser höher als 545 °C, weiter gecrackt wird.

3. Das Verfahren nach Anspruch 1 oder 2, **dadurch gekennzeichnet, dass** nach dem Unterbrechen der Zuführung von flüssiger Phase in den letzten Crackreaktor (36) die darin enthaltene flüssige Phase auf einer Temperatur, die mindestens 30 °C, bevorzugt mindestens 40 °C und noch besser mindestens 50 °C höher ist als die erwähnte erste Temperatur, weiter gecrackt wird.

4. Das Verfahren nach irgendeinem der Ansprüche 1 bis 3, **dadurch gekennzeichnet, dass** nach dem Unterbrechen der Zuführung von flüssiger Phase in den letzten Crackreaktor (36) die darin enthaltene flüssige Phase auf einer Temperatur, die niedriger ist als 650 °C und bevorzugt niedriger als 600 °C, weiter gecrackt wird.

5. Das Verfahren nach irgendeinem der Ansprüche 1 bis 4, **dadurch gekennzeichnet, dass** vor dem Unterbrechen der Zuführung von flüssiger Phase in den letzten Crackreaktor (36) die darin enthaltene flüssige Phase auf der erwähnten letzten Temperatur gehalten wird, die höchstens 50 °C, bevorzugt höchstens 40 °C und noch besser höchstens 30 °C höher ist als die erwähnte erste Temperatur.

6. Das Verfahren nach irgendeinem der Ansprüche 1 bis 5, **dadurch gekennzeichnet, dass** vor dem Unterbrechen der Zuführung von flüssiger Phase in den letzten Crackreaktor (36) die darin enthaltene flüssige Phase auf der erwähnten letzten Temperatur gehalten wird, die mindestens 20 °C höher ist als die erwähnte erste Temperatur.

7. Das Verfahren nach irgendeinem der Ansprüche 1 bis 6, **dadurch gekennzeichnet, dass** das erwähnte polyolefinhaltige Material ein oder mehrere Biopolymere enthält, insbesondere in einer Menge von mindestens 0,1 % Trockenmasse, und/oder das erwähnte polyolefinhaltige Material ein Post-Consumer-Abfallmaterial ist, insbesondere Abfallmaterial aus Holsystemen.

8. Das Verfahren nach irgendeinem der Ansprüche 1 bis 7, **dadurch gekennzeichnet, dass** der erwähnte feste Rückstand im Wesentlichen frei von Kohlenwasserstoffen ist.

9. Das Verfahren nach irgendeinem der Ansprüche 1 bis 8, **dadurch gekennzeichnet, dass** die erwähnte erste Temperatur niedriger oder gleich 510 °C und bevorzugt niedriger oder gleich 500 °C ist.

10. Das Verfahren nach irgendeinem der Ansprüche 1 bis 9, **dadurch gekennzeichnet, dass** die erwähnte erste Temperatur höher als 430 °C und bevorzugt höher als 440 °C ist.

11. Das Verfahren nach irgendeinem der Ansprüche 1 bis 10, **dadurch gekennzeichnet, dass** das erwähnte Material eine T₅₀-Zersetzungstemperatur hat, bei der in einer thermogravimetrischen Analyse ein Gewichtsverlust von 50 % stattfindet, bei einer Erwärmungsgeschwindigkeit von 10 °C pro Minute, wobei die erwähnte erste Temperatur höchstens 20 °C und bevorzugt höchstens 5 °C niedriger ist als die erwähnte T₅₀-Zersetzungstemperatur und noch besser mindestens 10 °C, am besten mindestens 20 °C höher als die erwähnte T₅₀-Zersetzungstemperatur.

12. Das Verfahren nach irgendeinem der Ansprüche 1 bis 11, **dadurch gekennzeichnet, dass** die gasförmige Phase (15) bei einem ersten Druck, der niedriger ist als 7,0 bara, bevorzugt niedriger als 5,0 bara und noch besser niedriger als 3,0 bara, im erwähnten ersten Crackreaktor (12) gehalten wird, wobei der erwähnte erste Druck bevorzugt höher als 0,1 bara, noch besser höher als 0,3 bara und am besten höher als 0,4 bara ist.

13. Das Verfahren nach irgendeinem der Ansprüche 1 bis 12, **dadurch gekennzeichnet, dass** die gasförmige Phase (15) bei einem ersten Druck im erwähnten ersten Crackreaktor (12) gehalten wird, wobei der erste Crackreaktor (12) bei mindestens zwei verschiedenen Werten des erwähnten ersten Drucks betrieben wird, einschließlich insbesondere mindestens eines niedrigeren Wertes, sodass das erwähnte erste gasförmige Produkt eine erste gewichtsgemittelte Kohlenstoffzahl hat, und mindestens eines höheren Wertes, der höher als der erwähnte niedrigere Wert ist, sodass das erwähnte erste gasförmige Produkt eine zweite gewichtsgemittelte Kohlenstoffzahl hat, die niedriger ist als die erwähnte erste gewichtsgemittelte Kohlenstoffzahl.

14. Das Verfahren nach Anspruch 13, **dadurch gekennzeichnet, dass** der erwähnte höhere Wert des erwähnten ersten Drucks größer ist als 1,0 bara, bevorzugt größer als 1,2 bara und noch besser größer als 1,4 bara.

15. Das Verfahren nach Anspruch 13 oder 14, **dadurch gekennzeichnet, dass** der erwähnte niedrigere Wert des erwähnten ersten Drucks kleiner ist als 1,0 bara, bevorzugt kleiner als 0,8 bara und noch besser kleiner als 0,6 bara.

16. Das Verfahren nach irgendeinem der Ansprüche 1 bis 15, **dadurch gekennzeichnet, dass** es den Schritt des Zuführens eines Teils der flüssigen Phase (13), die im ersten Crackreaktor (12) enthalten ist, in den erwähnten letzten Crackreaktor (36) umfasst.

17. Das Verfahren nach Anspruch 16, **dadurch gekennzeichnet, dass** eine schwerere Fraktion vom erwähnten ersten gasförmigen Crackprodukt abgetrennt wird, wobei diese schwerere Fraktion dem erwähnten letzten Crackreaktor (36) zugeführt wird.

18. Das Verfahren nach irgendeinem der Ansprüche 1 bis 15, **dadurch gekennzeichnet, dass** es den Schritt des Zuführens eines Teils der flüssigen Phase (13), die im ersten Crackreaktor (12) enthalten ist, in einen zweiten Crackreaktor (35) umfasst, der einer der erwähnten weiteren Crackreaktor ist, die sich vom erwähnten letzten Crackreaktor (36) unterscheiden.

19. Das Verfahren nach Anspruch 18, **dadurch gekennzeichnet, dass** eine schwerere Fraktion vom erwähnten ersten gasförmigen Crackprodukt abgetrennt wird, wobei diese schwerere Fraktion dem erwähnten zweiten Crackreaktor (35) zugeführt wird.

20. Das Verfahren nach Anspruch 18 oder 19, **dadurch gekennzeichnet, dass** die gasförmige Phase (15) im erwähnten ersten Crackreaktor auf einem ersten Druck gehalten wird und die gasförmige Phase (39) im erwähnten zweiten Crackreaktor (35) auf einem zweiten Druck gehalten wird, der höher ist als der erwähnte erste Druck, wobei der erwähnte zweite Druck bevorzugt mindestens 0,5 bar, noch besser mindestens 1,0 bar höher ist als der erwähnte erste Druck.

21. Das Verfahren nach irgendeinem der Ansprüche 18 bis 20, **dadurch gekennzeichnet, dass** die gasförmige Phase (39) bei einem Druck höher als 1,0 bara, bevorzugt bei einem Druck höher als 2,0 bara und noch besser bei einem Druck höher als 3,0 bara, aber bevorzugt bei einem Druck niedriger als 15,0 bara, noch besser bei einem Druck niedriger als 10,0 bara und am besten bei einem Druck niedriger als 5,0 bara im erwähnten zweiten Crackreaktor (35) gehalten wird.

22. Das Verfahren nach irgendeinem der Ansprüche 18 bis 21, **dadurch gekennzeichnet, dass** die flüssige Phase (37) auf einer zweiten Temperatur, die höchstens 30 °C, bevorzugt höchstens 20 °C und noch besser höchstens 10 °C höher ist als die erwähnte erste Temperatur, im erwähnten zweiten Crackreaktor (35) gehalten wird.

23. Das Verfahren nach irgendeinem der Ansprüche 18 bis 22, **dadurch gekennzeichnet, dass** der erwähnte zweite Crackreaktor (35) ein kontinuierlicher Rührkesselreaktor ist.

24. Das Verfahren nach irgendeinem der Ansprüche 1 bis 23, **dadurch gekennzeichnet, dass** das erwähnte Material mindestens eine Komponente enthält, einschließlich insbesondere des erwähnten mindestens einen thermisch stabileren Polymers, die sich in der im ersten Crackreaktor (12) enthaltenen flüssigen Phase (13) ansammelt, wobei die Menge des erwähnten Teils der im ersten Crackreaktor (12) enthaltenen flüssigen Phase (13), die einem der erwähnten einen oder mehreren weiteren Crackreaktoren (35, 36) zugeführt wird, ausgewählt wird, um die Konzentration der erwähnten Komponente in der im ersten Crackreaktor (12) enthaltenen flüssigen Phase (13) unter einer maximalen Konzentration zu halten.

25. Das Verfahren nach irgendeinem der Ansprüche 1 bis 24, **dadurch gekennzeichnet, dass** das erwähnte Material mindestens eine Komponente enthält, einschließlich insbesondere des erwähnten mindestens einen thermisch stabileren Polymers, die sich in der im ersten Crackreaktor (12) enthaltenen flüssigen Phase (13) ansammelt, wobei die Menge des erwähnten Teils der im ersten Crackreaktor (12) enthaltenen flüssigen Phase (13), die einem der erwähnten einen oder mehreren weiteren Crackreaktoren (35, 36) zugeführt wird, ausgewählt wird, um die dynamische Viskosität der im ersten Crackreaktor (12) enthaltenen flüssigen Phase (13), auf der erwähnten ersten Temperatur, unter 200 mPa.s, bevorzugt unter 100 mPa.s und noch besser unter 50 mPa.s zu halten.

26. Das Verfahren nach irgendeinem der Ansprüche 1 bis 25, **dadurch gekennzeichnet, dass** der erwähnte erste Crackreaktor (12) ein kontinuierlicher Rührkesselreaktor ist.

27. Das Verfahren nach irgendeinem der Ansprüche 1 bis 26, **dadurch gekennzeichnet, dass** der erwähnte letzte Reaktor (36) ein Rührkesselreaktor ist.

## Revendications

1. Procédé de craquage d'un matériau contenant de la polyoléfine, en particulier un matériau contenant de la polyoléfine qui contient au moins 60 % en poids sec d'une ou de plusieurs polyoléfines et éventuellement d'au moins un polymère thermiquement plus stable, dans lequel procédé ledit matériau est craqué thermiquement pour être convertie en un ou plusieurs produits de craquage gazeux, laissant ainsi un résidu solide (50),
**caractérisé en ce que**
ledit matériau est craquée par étapes dans une série d'au moins deux réacteurs de craquage successifs (12, 35, 36) qui contiennent chacun une phase liquide (13, 38, 46) et une phase gazeuse (15, 39, 48), la phase liquide étant craquée dans chacun des réacteurs de craquage pour produire un produit de craquage gazeux qui est éliminé du réacteur de craquage au cours de la production de ce dernier, ladite série de réacteurs de craquage comprenant un premier réacteur de craquage (12) et un ou plusieurs autres réacteurs de craquage (35, 36), y compris un réacteur de craquage final (36), le premier réacteur de craquage (12) étant alimenté par ledit matériau contenant de la polyoléfine et ledit ou lesdits autres réacteurs de craquage (35, 36) étant chacun alimentés au moins par une partie de la phase liquide contenue dans le réacteur de craquage précédent de ladite série,
dans lequel procédé :
- la phase liquide (13) contenue dans ledit premier réacteur de craquage (12) est maintenue à une première température comprise entre 420°C et 525°C et est craquée dans ledit premier réacteur de craquage (12) à ladite première température pour produire un premier produit de craquage gazeux ;
- le premier produit de craquage gazeux est retiré du premier réacteur de craquage (12) pendant sa production et est ensuite au moins partiellement condensé ;
- la phase liquide (46) contenue dans ledit réacteur de craquage final (36) est maintenue à une température finale, qui est supérieure d'au moins 20°C à ladite première température, et est craquée dans ledit réacteur de craquage final (36) à ladite température finale pour produire un produit de craquage gazeux final ; et
- le produit de craquage gazeux final est retiré du réacteur de craquage final (36) au cours de sa production et est ensuite au moins partiellement condensé,
dans lequel procédé :
- l'alimentation de la phase liquide dudit réacteur de craquage précédent dans le réacteur de craquage final (36) est interrompue à des moments prédéterminés pendant que la phase liquide (46) contenue dans ledit réacteur de craquage final (36) est craquée davantage jusqu'à ce que la phase liquide (46) contenue dans ledit réacteur de craquage final (36) soit convertie en ledit résidu solide (50) ;
- le résidu solide (50) est retiré du réacteur de craquage final (36) ; et
- après avoir retiré le résidu solide (50) du réacteur de craquage final (36), l'alimentation en phase liquide du réacteur de craquage précédent dans le réacteur de craquage final (36) reprend.

2. Procédé selon la revendication 1, **caractérisé en ce qu'**après avoir interrompu l'alimentation de la phase liquide dans le réacteur de craquage final (36), la phase liquide qu'il contient est craquée à une température supérieure à 525°C, de préférence supérieure à 535°C et plus préférentiellement supérieure à 545°C.

3. Procédé selon la revendication 1 ou 2, **caractérisé en ce qu'**après avoir interrompu l'alimentation de la phase liquide dans le réacteur de craquage final (36), la phase liquide qu'il contient est craquée à une température supérieure d'au moins 30°C, de préférence d'au moins 40°C et plus préférentiellement d'au moins 50°C à ladite première température.

4. Procédé selon l'une quelconque des revendications 1 à 3, **caractérisé en ce qu'**après avoir interrompu l'alimentation de la phase liquide dans le réacteur de craquage final (36), la phase liquide qu'il contient est craquée à une température inférieure à 650°C et, de préférence, inférieure à 600°C.

5. Procédé selon l'une quelconque des revendications 1 à 4, **caractérisé en ce qu'**avant d'interrompre l'alimentation en phase liquide dans le réacteur de craquage final (36), la phase liquide qu'il contient est maintenue à ladite température finale qui est au maximum de 50°C, de préférence au maximum de 40°C et plus préférentiellement au maximum de 30°C plus élevée que ladite première température.

6. Procédé selon l'une quelconque des revendications 1 à 5, **caractérisé en ce qu'**avant d'interrompre l'alimentation en phase liquide dans le réacteur de craquage final (36), la phase liquide qu'il contient est maintenue à ladite température finale qui est supérieure d'au moins 20°C à ladite première température.

7. Procédé selon l'une quelconque des revendications 1 à 6, **caractérisé en ce que** ledit matériau contenant de la polyoléfine contient un ou plusieurs biopolymères, en particulier dans une quantité d'au moins 0,1 % en poids sec, et/ou ledit matériau contenant de la polyoléfine est un matériau de déchets de post-consommation, en particulier un matériau de déchets provenant d'une collecte en bordure de trottoir.

8. Procédé selon l'une quelconque des revendications 1 à 7, **caractérisé en ce que** ledit résidu solide est substantiellement exempt d'hydrocarbures.

9. Procédé selon l'une quelconque des revendications 1 à 8, **caractérisé en ce que** ladite première température est inférieure ou égale à 510°C et de préférence inférieure ou égale à 500°C.

10. Procédé selon l'une quelconque des revendications 1 à 9, **caractérisé en ce que** la première température est supérieure à 430°C et de préférence supérieure à 440°C.

11. Procédé selon l'une quelconque des revendications 1 à 10, **caractérisé en ce que** ledit matériau a une température de dégradation T₅₀ à laquelle une perte de poids de 50 % se produit dans une analyse thermogravimétrique, à une vitesse de chauffage de 10°C par minute, ladite première température étant au maximum de 20°C et de préférence au maximum de 5°C inférieure à ladite température de dégradation T₅₀ et est de préférence au minimum de 10°C, de préférence au minimum de 20°C supérieure à ladite température de dégradation T₅₀.

12. Procédé selon l'une quelconque des revendications 1 à 11, **caractérisé en ce que** la phase gazeuse (15) est maintenue dans ledit premier réacteur de craquage (12) à une première pression inférieure à 7,0 bara, de préférence inférieure à 5,0 bara et plus préférentiellement inférieure à 3,0 bara, ladite première pression étant de préférence supérieure à 0,1 bara, plus préférentiellement supérieure à 0,3 bara et très préférentiellement supérieure à 0,4 bara.

13. Procédé selon l'une quelconque des revendications 1 à 12, **caractérisé en ce que** la phase gazeuse (15) est maintenue dans ledit premier réacteur de craquage (12) à une première pression, le premier réacteur de craquage (12) étant exploité à au moins deux valeurs différentes de ladite première pression, dont notamment au moins une valeur inférieure de sorte que ledit premier produit gazeux présente un premier indice de carbone moyen en poids et au moins une valeur supérieure, plus élevée que ladite valeur inférieure, de sorte que ledit premier produit gazeux présente un second indice de carbone moyen en poids inférieur audit premier indice de carbone moyen en poids.

14. Procédé selon la revendication 13, **caractérisé en ce que** ladite valeur supérieure de ladite première pression est supérieure à 1,0 bara, de préférence supérieure à 1,2 bara et plus préférentiellement supérieure à 1,4 bara.

15. Procédé selon la revendication 13 ou 14, **caractérisé en ce que** ladite valeur inférieure de ladite première pression est inférieure à 1,0 bara, de préférence inférieure à 0,8 bara et plus préférentiellement inférieure à 0,6 bara.

16. Procédé selon l'une quelconque des revendications 1 à 15, **caractérisé en ce qu'**il comprend l'étape consistant à introduire une partie de la phase liquide (13) contenue dans le premier réacteur de craquage (12) dans ledit réacteur de craquage final (36).

17. Procédé selon la revendication 16, **caractérisé en ce qu'**une fraction plus lourde est séparée dudit premier produit de craquage gazeux, laquelle fraction plus lourde est introduite dans ledit réacteur de craquage final (36).

18. Procédé selon l'une quelconque des revendications 1 à 15, **caractérisé en ce qu'**il comprend l'étape consistant à introduire une partie de la phase liquide (13) contenue dans le premier réacteur de craquage (12) dans un second réacteur de craquage (35) qui est l'un desdits réacteurs de craquage supplémentaires différents dudit réacteur de craquage final (36).

19. Procédé selon la revendication 18, **caractérisé en ce qu'**une fraction plus lourde est séparée dudit premier produit de craquage gazeux, laquelle fraction plus lourde est introduite dans ledit second réacteur de craquage (35).

20. Procédé selon la revendication 18 ou 19, **caractérisé en ce que** la phase gazeuse (15) est maintenue dans ledit premier réacteur de craquage (12) à une première pression et que la phase gazeuse (39) est maintenue dans ledit second réacteur de craquage (35) à une seconde pression qui est supérieure à ladite première pression, ladite seconde pression étant de préférence supérieure d'au moins 0,5 bar, plus préférentiellement d'au moins 1,0 bar à ladite première pression.

21. Procédé selon l'une quelconque des revendications 18 à 20, **caractérisé en ce que** la phase gazeuse (39) est maintenue dans ledit second réacteur de craquage (35) à une pression supérieure à 1,0 bara, de préférence à une pression supérieure à 2,0 bara et plus préférentiellement à une pression supérieure à 3,0 bara, mais de préférence à une pression inférieure à 15,0 bara, plus préférentiellement à une pression inférieure à 10,0 bara et plus préférentiellement à une pression inférieure à 5,0 bara.

22. Procédé selon l'une quelconque des revendications 18 à 21, **caractérisé en ce que** la phase liquide (37) est maintenue dans ledit second réacteur de craquage (35) à une seconde température qui est au maximum de 30°C, de préférence au maximum de 20°C et plus préférentiellement au maximum de 10°C plus élevée que ladite première température.

23. Procédé selon l'une quelconque des revendications 18 à 22, **caractérisé en ce que** ledit second réacteur de craquage (35) est un réacteur à réservoir agité continu.

24. Procédé selon l'une quelconque des revendications 1 à 23, **caractérisé en ce que** ledit matériau contient au moins un composant, dont notamment ledit au moins un polymère thermiquement plus stable, qui s'accumule dans la phase liquide (13) contenue dans le premier réacteur de craquage (12), la quantité de ladite partie de la phase liquide (13) contenue dans le premier réacteur de craquage (12) qui est introduite dans l'un dudit ou desdits autres réacteurs de craquage (35, 36) est sélectionnée pour maintenir la concentration dudit composant dans la phase liquide (13) contenue dans le premier réacteur de craquage (12) en dessous d'une concentration maximale.

25. Procédé selon l'une quelconque des revendications 1 à 24, **caractérisé en ce que** ledit matériau contient au moins un composant, y compris en particulier ledit au moins un polymère thermiquement plus stable, qui s'accumule dans la phase liquide (13) contenue dans le premier réacteur de craquage (12), la quantité de ladite partie de la phase liquide (13) contenue dans le premier réacteur de craquage (12) qui est introduite dans l'un dudit ou desdits autres réacteurs de craquage (35, 36) étant sélectionnée pour maintenir la viscosité dynamique de la phase liquide (13) dans le premier réacteur de craquage (12), à ladite première température, en dessous de 200 mPa.s, de préférence inférieure à 100 mPa.s et plus préférablement inférieure à 50 mPa.s.

26. Procédé selon l'une quelconque des revendications 1 à 25, **caractérisé en ce que** ledit premier réacteur de craquage (12) est un réacteur à réservoir agité continu.

27. Procédé selon l'une quelconque des revendications 1 à 26, **caractérisé en ce que** le réacteur final (36) est un réacteur à réservoir agité.
